# EUROPÄISCHE PATENTSCHRIFT

(11) **EP 3 571 688 B1**
(45) Veröffentlichungstag und Bekanntmachung des Hinweises auf die Patenterteilung: **07.07.2021**
(21) Anmeldenummer: 18700539.2
(22) Anmeldetag: 05.01.2018
(51) Int. Cl.: F16M 11/10, F16M 11/18, F16M 11/20, F16M 13/02, G09F 9/302, G09F 19/02, G09F 15/00

(54) **MONITORSYSTEM**
MONITOR SYSTEM
SYSTÈME DE SURVEILLANCE

(30) Priorität: 06.01.2017 EP 17150544
(43) Veröffentlichungstag der Anmeldung: 27.11.2019
(73) Patentinhaber: Simtec Systems GmbH, 38108 Braunschweig (DE)
(72) Erfinder: KAUFMANN, Bernd, 38124 Braunschweig (DE)
(74) Vertreter: Gramm, Lins & Partner Patent- und Rechtsanwälte PartGmbB
(86) Internationale Anmeldenummer: PCT/EP2018/050272
(87) Internationale Veröffentlichungsnummer: WO 2018/127563

(56) Entgegenhaltungen:
- CN-A- 105 179 902
- KR-A- 20140 073 791
- US-A1- 2004 031 893
- US-A1- 2009 050 763
- US-A1- 2012 224 311
- US-A1- 2013 027 618

## Beschreibung

Die Erfindung betrifft ein Monitorsystem gemäß dem Oberbegriff von Anspruch 1.

Die US 2012/224311 A1 und die KR 2014 0073791 A beschreiben motorisch bewegbare Monitorsysteme gemäß des Oberbegriffs des Hauptanspruchs.

Die US 2013/027618 A1 beschreibt ein statisches Trägersystem für Monitore mit Scherenantrieben. Auch die CN 105 179 902 A und die US 2004/031893 A1 offenbaren statische Monitorträgersysteme. Die US 2009/0050763 A1 betrifft eine Monitorhalterung für eine Wand.

Eine Bewegung der Monitore ist mit solchen Systemen nicht möglich.

Der Erfindung liegt die Aufgabe zu Grunde, ein Monitorsystem vorzuschlagen, das Nachteile im Stand der Technik vermindert.

Die Erfindung löst das Problem durch ein Monitorsystem mit den Merkmalen von Anspruch 1.

Vorteilhaft daran ist, dass die zusätzliche Bewegungsmöglichkeit der Monitore selbst die Aufmerksamkeit des Betrachters auf besonders intensive Weise zu binden vermag. Außerdem hat sich herausgestellt, dass die Bewegungen, die auf dem Monitor selbst dargestellt werden, und die Bewegung des Monitors selber als unabhängige Bewegungen wahrgenommen werden, wobei die Bewegung des Monitors selbst die Aufmerksamkeit besonders stark bindet. Bei den Freiheitsgraden handelt es sich vorzugsweise um einen Dreh-Freiheitsgrad für eine Drehung um die Basis und einen Translationsfreiheitsgrad bezüglich eines Abstands des Monitors von der Drehachse dieser Drehung. Günstig ist es, wenn die Monitore in drei Freiheitsgraden motorisch bewegbar an der Basis befestigt sind. Der dritte Freiheitsgrad ist dann ein Schwenkfreiheitsgrad um einen Nickwinkel, der weiter unten näher erläutert wird. Jeder Monitor kann zudem einen Gier-Freiheitsgrad haben.

Im Rahmen der vorliegenden Beschreibung ist darunter, dass vier Monitore explizit genannt werden, insbesondere zu verstehen, dass zumindest vier Monitore vorhanden sind. Insbesondere sind 6, 8, 9, 10, 11, 12 oder mehr Monitore vorhanden.

Wird der unbestimmte Artikel verwendet, so ist darunter zu verstehen, dass genau ein entsprechendes Objekt vorhanden sein kann. Es ist aber auch möglich, dass zumindest ein entsprechendes Objekt vorhanden ist. In anderen Worten ist es möglich, dass zwei, drei oder mehr entsprechende Objekt vorhanden sind.

Unter einem Monitor wird insbesondere eine Vorrichtung verstanden, die einen Bildschirm aufweist, der selbsttätig Bilder oder Filme aktiv, also durch Emissionen selbst erzeugtes Licht, darstellen kann. Insbesondere ist eine Leinwand kein Monitor. Es ist jedoch auch möglich und von der Erfindung umfasst, dass anstelle eines Monitors oder mehrere Monitore jeweils eine Leinwand mit einem zugehörigen Projektor verwendet wird.

Unter der Basis wird insbesondere ein Bauteil verstanden, das fest mit einem Gebäude oder dem Boden verbindbar ausgebildet ist. Zwar ist es möglich, nicht aber notwendig, dass die Basis selber bewegbar ausgebildet ist. Insbesondere ruht die Basis beim Betrieb des Monitorsystems. Das Monitorsystem kann beispielsweise stehend oder hängend am Gebäude montiert sein. Insbesondere kann die Basis als Säule ausgebildet sein.

Die Monitore sind mittels Scherenantrieben an der Basis befestigt.

Unter einem Scherenantrieb wird insbesondere ein Antrieb verstanden, der zumindest zwei, vorzugsweise zumindest vier oder mehr, zickzackförmig miteinander verbundene Scherensegmente aufweist. Vorteilhaft an einem Scherenantrieb ist, dass ein vergleichsweise geringer Motor-Hub eines Motors des Scherenantriebs, beispielsweise eines Hydraulikzylinders, Pneumatikzylinders, eines Kugelgewindetriebs oder eines Kurbelantriebs, ausreicht, um einen großen Hub, also eine große Änderung der Auskraglänge des Scherenantriebs, zu bewirken. Vorteilhaft an einem Scherenantrieb ist zudem ein besonders großer Hubquotient, wobei der Hubquotient berechnet wird aus der Länge in einer ausgefahrenen Position als Zähler und eine Länge in einer eingefahrenen Position als Nenner. Das erlaubt besonders eindrucksvolle Bewegungen der Monitore.

Der Scherenantrieb hat vorzugsweise einen Scherenarm aus mehreren Scherensegmenten, die miteinander so verbunden sind, dass sie relativ zueinander schwenken können und so eine Auskraglänge veränderbar ist. Die Auskraglänge ist die Länge, um die der Monitor ausgefahren ist. Wenn der entsprechende Monitor um eine kollektive Drehachse, insbesondere eine Vertikalachse, drehbar ist, ist die Auskraglänge der Abstand zur Drehachse. Jeder Scherenantrieb besitzt zudem zumindest einen Antrieb. Es ist möglich, nicht aber notwendig, dass zwei oder mehr Scherenantriebe, insbesondere alle Scherenantriebe eines Segments, einen Antrieb teilen.

Vorzugsweise ist der Scherenantrieb mit einem proximalen Ende an der Basis befestigt. Der Scherenantrieb besitzt ein distales Ende, an dem der jeweilige Monitor befestigt ist. Vorzugsweise ist der Monitor um eine Monitor-Schwenkachse schwenkbar an dem distalen Ende befestigt ist. Dieses Merkmal gilt vorzugsweise zumindest für die Mehrzahl, insbesondere für alle, Scherenantriebe und die entsprechend zugeordneten Monitore. Unter dem Merkmal, dass derer Scherenantrieb mit einem proximalen Ende an der Basis befestigt ist, wird insbesondere verstanden, dass der Scherenarm mit seinem proximalen Ende an der Basis befestigt ist.

Die Monitor-Schwenkachse verläuft vorzugsweise dann vertikal, wenn der entsprechende Scherenarm sich in horizontaler Richtung erstreckt. Die Monitor-Schwenkachse verläuft vorzugsweise quer, insbesondere senkrecht, zu einer Erstreckungsrichtung des Scherenarms.

Besonders günstig ist es, wenn der Monitor um zumindest ± 45° um die Monitor-Schwenkachse gierbar befestigt ist. In diesem Fall ist ein Winkel zwischen den beiden extremen Positionen bezüglich der Gierbewegung zumindest 90°. Es hat sich herausgestellt, dass auf diese Weise besonders attraktiv erscheinende Bewegungsmuster verwirklichbar sind.

Vorzugsweise ist der Scherenantrieb um eine horizontale Scherenantriebs-Schwenkachse automatisch schwenkbar an der Basis befestigt. Die Monitore können dann in ihren horizontalen Abstand voneinander variiert werden. Unter dem Merkmal, dass der Scherenantrieb um eine horizontale Scherenantriebs-Schwenkachse schwenkbar an der Basis befestigt, wird insbesondere verstanden, dass eine gedachte - und gegebenenfalls zeitlich veränderbare - Schwenkachse existiert, um die der Monitor mittels des Scherenantriebs verschwenkbar ist. In anderen Worten kann ein Nickwinkel a, den der Scherenarm mit der Horizontalen bildet, durch Betätigen eines Motors verändert werden.

Das Monitorsystem besitzt eine erste Monitor-Gruppe, die zumindest drei, insbesondere zumindest oder genau vier, Monitore aufweist, die kollektiv und drehbar an der Basis befestigt sind, wobei das Monitorsystem eine zweite Monitor-Gruppe aufweist, die zumindest drei, insbesondere zumindest oder genau vier, Monitore aufweist, die kollektiv drehbar an der Basis befestigt sind. Besonders bevorzugt besitzt das Monitorsystem eine dritte Monitor-Gruppe, die drei, insbesondere zumindest oder genau vier, Monitore aufweist, die kollektiv drehbar in der Basis befestigt sind. Eine derartige kollektive Drehbarkeit ermöglicht ein mit bisherigen Monitor-Systemen nicht mögliches Bewegungsbild der Monitore, was aufmerksamkeitssteigernd wirkt.

Besonders günstig ist es, wenn das Monitor-System ein erstes Segment, das um eine Vertikalachse automatisch drehbar an der Basis befestigt ist und an dem die Monitore der ersten Monitor-Gruppe befestigt sind, und ein zweites Segment, das um die gleiche Vertikalachse automatisch drehbar an der Basis befestigt ist, an dem die Monitore an der zweiten Monitor-Gruppe befestigt sind und das oberhalb des ersten Segments angeordnet ist, aufweist. Unter dem Merkmal, dass das erste Segment automatisch drehbar ist, wird insbesondere verstanden, dass ein Motor existiert, mittels dem das Segment drehbar ist.

Besonders günstig ist es, wenn das Monitorsystem ein drittes Segment aufweist, das um die Vertikalachse drehbar an der Basis befestigt ist, an dem die Monitore der dritten Monitor-Gruppe befestigt sind und das oberhalb des zweiten Segmentes angeordnet ist. In anderen Worten sind die Monitore mittels des jeweiligen Segmentes an der Basis befestigt.

Unter einem Segment wird insbesondere ein Bauteil verstanden, das die Basis ringartig oder ringförmig umgibt. Ein derartiger Aufbau ist besonders stabil und robust. Es ist aber auch möglich, dass beispielsweise die Segmente C-förmig ausgebildet sind oder eine andere Form haben.

Die Monitore der ersten Monitor-Gruppe sind um eine gemeinsame Segment-Drehachse drehbar montiert und mittels jeweils eines Scherenantriebs motorisch bewegbar. Alle diese Scherenantriebe haben eine gemeinsame erste Antriebseinheit. Hierunter ist insbesondere zu verstehen, dass nur ein einziger Motor, insbesondere Elektromotor, existiert, mittels dem alle Monitore der ersten Monitor-Gruppe synchronfördernd bewegbar sind. Insbesondere sind die Scherenantriebe so ausgebildet, dass ein Schwerpunkt der Monitore beim Ein- und Ausfahren der Scherenantriebe weitgehend unverändert bleibt. Alternativ zu Elektromotoren können auch beispielsweise Hydraulikmotoren verwendet werden.

Vorzugsweise umfasst das Monitorsystem (wenn zumindest zwei Segmente vorhanden sind vorzugsweise für jedes Segment), eine erste Plattform, zumindest eine zweite Plattform und eine Antriebseinheit, mittels der zwei Plattformen relativ zueinander axial oder in Drehrichtung bewegbar sind, wobei diese axiale Bewegung oder die Drehbewegung zu einer Änderung der Auskraglänge der Scherenarme der Scherenantriebe führt, die am Segment befestigt sind.

Vorzugsweise umfasst das Monitorsystem (wenn zumindest zwei Segmente vorhanden sind vorzugsweise für jedes Segment) eine dritte Plattform, die axial oder in Drehrichtung relativ zu einer der anderen Plattformen befestigt ist, wobei diese axiale Bewegung oder die Drehbewegung zu einer Änderung des Nickwinkels der Scherenarme der Scherenantriebe führt, die am, die am Segment befestigt sind.

Wenn - wie gemäß einer bevorzugten Ausführungsform vorgesehen - das Monitor-system zwei oder mehr Segmente hat, wobei an jedem Segment genau eine Gruppe an Monitoren befestigt ist, so besitzt jedes Segment vorzugsweise zumindest zwei , insbesondere drei, Plattformen und je eine Antriebseinheit zum Bewegen von erster und zweiter Plattform zueinander und je eine Antriebseinheit zum Bewegen von erster und dritter Plattform relativ zueinander.

Besonders günstig ist es, wenn die erste Antriebseinheit einen ersten Antrieb, insbesondere einen ersten Kurbeltrieb, aufweist, mittels dem ein erster axialer Abstand einer ersten Plattform von einer zweiten Plattform veränderbar ist, wobei die Scherenantriebe jeweils mit einem ersten Fußpunkt ihres jeweiligen Scherenarms zumindest auch mit der ersten Plattform verbunden sind, und wobei die Scherenantriebe mit jeweils einem zweiten Fußpunkt ihres Scherenarms zumindest auch mit der zweiten Plattform verbunden sind, sodass mittels des ersten Antriebs, insbesondere mittels des ersten Kurbeltriebs, die Scherenarme ein- und ausfahrbar sind.

Unter einer Plattform wird insbesondere ein Bauteil oder eine Baugruppe aus untereinander verbundenen Bauteilen verstanden, die kollektiv bewegbar ist.

Unter dem Merkmal, dass die Scherenantriebe mit jeweils ihrem ersten Fußpunkt ihres Scherenarms zumindest auch mit der ersten Plattform verbunden sind, wird insbesondere verstanden, dass es möglich ist, dass die Fußpunkte auch mit einer anderen, insbesondere einer dritten, Plattform verbunden sind. Es ist zudem möglich, dass die Fußpunkte an einem Bauteil befestigt sind, das seinerseits an der ersten Plattform befestigt ist.

Vorzugsweise sind die Scherenarme mit ihrem jeweiligen ersten Fußpunkt mittels eines Schwenkhebels mit der ersten Plattform verbunden. In diesem Fall ist es günstig, wenn die erste Antriebseinheit einen zweiten Antrieb, insbesondere einen zweiten Kurbeltrieb, aufweist, mittels dem ein Schwenkwinkel des Schwenkhebels veränderbar ist, sodass die Scherenantriebe kollektiv um einen Nickwinkel schwenkbar sind.

Günstig ist es, wenn das Monitorsystem eine dritte Plattform aufweist, die von der ersten Plattform und der zweiten Plattform unabhängig bewegbar ist. Günstig ist es in diesem Fall, wenn der Schwenkhebel an der dritten Plattform angelenkt ist, wobei mittels des zweiten Antriebs, insbesondere des zweiten Kurbeltriebs, ein axialer Abstand zwischen der dritten Plattform und der ersten Plattform veränderbar ist. Auf diese Weise kann durch das Verstellen des axialen Abstands zwischen der dritten Plattform und der ersten Plattform die Auskraglänge der Scherenarme verändert werden.

Vorzugsweise sind die drei Plattformen nur in axialer Richtung zueinander bewegbar.

Vorzugsweise besitzt der (a) erste Kurbeltrieb (i) einen ersten Elektromotor, der an der ersten Plattform befestigt ist, (ii) ein erstes Kegelradgetriebe, das ein erstes Tellerrad, ein erstes Erstkurbeltrieb-Kegelrad und ein zweites Erstkurbeltrieb-Kegelrad hat, (iii) eine erste Erstkurbeltrieb-Kurbel, die mit dem ersten Erstkurbeltrieb-Kegelrad drehfest verbunden ist, und (iv) eine zweite Erstkurbeltrieb-Kurbel, die mit dem zweiten Erstkurbeltrieb-Kegelrad drehfest verbunden ist, hat, (v) ein erstes Erstkurbeltrieb-Pleuel, das mit einem ersten Ende mit der ersten Erstkurbeltrieb-Kurbel und mit einem zweiten Ende mit der zweiten Plattform verbunden ist, und (vi) ein zweites Erstkurbeltrieb-Pleuel, das mit einem ersten Ende mit der zweiten Erstkurbeltrieb-Kurbel und mit einem zweiten Ende mit der zweiten Plattform verbunden ist, wobei (b) der erste Elektromotor mit dem ersten Tellerrad zum Antreiben verbunden ist, sodass die Erstkurbeltrieb-Kurbeln mittels des ersten Elektromotors drehbar sind und dass (c) die Erstkurbeltrieb-Kurbeln so mit den jeweiligen Kegelrädern verbunden sind, dass die erste Erstkurbeltrieb-Kurbel genau dann in ihrem oberen Totpunkt ist, wenn die zweite Erstkurbeltrieb-Kurbel in ihrem oberen Totpunkt ist und dass die erste Erstkurbeltrieb-Kurbel genau dann in ihrem unteren Totpunkt ist, wenn die zweite Erstkurbeltrieb-Kurbel in ihrem unteren Totpunkt ist. Es sei darauf hingewiesen, dass es gemäß der oben gemachten allgemeinen Anmerkung möglich, nicht aber notwendig ist, dass genau zwei Erstkurbeltrieb-Kegelräder vorhanden sind, es können aber auch drei oder mehr Erstkurbeltrieb-Kegelräder vorhanden sein.

Vorzugsweise liegen die beiden Erstkurbeltrieb-Kegelräder einander genau gegenüber.

Der Vorteil eines derartigen Kurbeltriebs ist, dass die extremen Positionen, also dann, wenn die Kurbeln am oberen oder unteren Totpunkt sind, mit sehr geringem oder verschwindendem Energieaufwand gehalten werden können. Bei vielen Anwendungen verbringen die Monitore die meiste Zeit in einer der beiden extremen Positionen. Es ist in diesem Fall günstig, wenn der Stromverbrauch in diesen Positionen möglichst gering ist. Insbesondere ist dann die entstehende Verlustwärme ebenfalls klein. Das vermeidet eine Erhitzung der Antriebe und erhöht die Lebensdauer.

Unter dem Merkmal, dass die ersten Kurbeln genau dann an ihrem oberen bzw. unteren Totpunkt sind, wenn die zweiten Kurbeln an dem entsprechenden Totpunkt sind, wird insbesondere verstanden, dass sich die Winkelstellungen, bei denen der jeweilige obere Totpunkt erreicht wird, um höchstens 2°, insbesondere höchstens 1°, voneinander unterscheiden. Auf diese Weise sind die Bewegungen der jeweils angetriebenen Monitore hochgradig synchron. Auf diese Weise wird sichergestellt, dass der Schwerpunkt der Gruppe der Monitore sich nicht ändert, wenn diese ein- und ausgefahren werden. Das erhöht die Sicherheit. Zudem können die Monitore um eine gemeinsame Segment-Drehachse gedreht werden, ohne dass Kräfte aufgrund azentrischer Lagerung entstehen.

Besonders günstig ist es, wenn (a) der zweite Kurbeltrieb (i) einen zweiten Elektromotor (unten), (ii) ein zweites Kegelradgetriebe, das ein zweites Tellerrad, ein erstes Zweitkurbeltrieb-Kegelrad und ein zweites Zweitkurbeltrieb -Kegelrad hat, (iii) eine erste Zweitkurbeltrieb-Kurbel, die mit dem ersten Zweitkurbeltrieb-Kegelrad drehfest verbunden ist, und (iv) eine zweite Zweitkurbeltrieb-Kurbel, die mit dem zweiten Zweitkurbeltrieb-Kegelrad drehfest verbunden ist, hat, (v) ein erstes Zweitkurbeltrieb-Pleuel, das mit einem ersten Ende mit der ersten Zweitkurbeltrieb-Kurbel und mit einem zweiten Ende mit der dritten Plattform verbunden ist, und (vi) ein zweites Zweitkurbeltrieb-Pleuel, das mit einem ersten Ende mit der zweiten Zweitkurbeltrieb-Kurbel und mit einem zweiten Ende mit der dritten Plattform verbunden ist, (b) der zweite Elektromotor mit dem zweiten Tellerrad zum Antreiben verbunden ist, sodass die Zweitkurbeltrieb-Kurbeln mittels des zweiten Elektromotors drehbar sind und dass (c) die Zweitkurbeltrieb-Kurbeln so mit den jeweiligen Kegelrädern verbunden sind, dass die erste Zweitkurbeltrieb-Kurbel genau dann in ihrem oberen Totpunkt ist, wenn die zweite Zweitkurbeltrieb-Kurbel in ihrem oberen Totpunkt ist und dass die erste Zweitkurbeltrieb-Kurbel genau dann in ihrem unteren Totpunkt ist, wenn die zweite Zweitkurbeltrieb-Kurbel in ihrem unteren Totpunkt ist. Es ist auf diese Weise möglich, dass alle Monitore synchron in ihrem Nickwinkel verändert werden können. Vorzugsweise liegen die beiden Zweitkurbeltrieb-Kegelräder einander genau gegenüber.

Günstig ist es, je nach Anordnung zwei oder drei Kurbeln zu verwendet. Dadurch wird Klemmen verhindert und bei dreien erhält man zusätzliche Stabilität. Vier Kurbeln können zu einer mechanischen Überbestimmung führen.

Besonders günstig ist es, wenn ein Abstand des ersten Tellerrads vom zweiten Tellerrad kleiner ist als das 1,5-fache des Durchmessers des Erstkurbeltrieb-Kegelrades. In anderen Worten sind der erste Kurbeltrieb und der zweite Kurbeltrieb ineinander verschachtelt, was die Bauhöhe reduziert.

Vorzugsweise sind die Scherenantriebe und/oder die Kurbeltrieb-Kegelräder baugleich. Das vermindert den Fertigungsaufwand.

Besonders günstig ist es, wenn das erste Tellerrad mittels eines Zahnrads mit Stirnverzahnung angetrieben ist. Dieses Stirnrad kann Teil eines Untersetzungsgetriebes sein.

Das Monitorsystem besitzt vorzugsweise eine elektrische Steuerung, die mit allen Antrieben des Monitorsystems zum Antreiben und/oder Ansteuern verbunden ist. Unter dem Ansteuern wird insbesondere auch ein Regeln im regelungstechnischen Sinne verstanden. Günstig ist es, wenn die Steuerung eingerichtet ist zum automatischen Durchführen eines Verfahrens mit den Schritten (i) Bewegen der Monitore aus einer ersten Konfiguration in eine zweite Konfiguration. Alternativ oder zusätzlich ist die Steuerung ausgerichtet zum automatischen Drehen zumindest eines Segments, insbesondere aller Segmente, um eine Segment-Drehachse.

Vorzugsweise sind in der ersten Konfiguration in zumindest einer Monitor-Gruppe ein erster Monitor und ein zweiter Monitor Seit-an-Seit angeordnet, wobei die Monitore in eine erste Richtung weisen, wobei ein dritter Monitor und ein vierter Monitor Seit-an-Seit angeordnet sind und in eine zweite Richtung weisen, die der ersten Richtung entgegengesetzt ist, wobei ein erster Scherenantrieb, mit dem der erste Monitor befestigt ist, und ein dritter Scherenantrieb, mit dem der dritte Monitor befestigt ist, sich entgegengesetzt der Richtung erstrecken und wobei ein zweiter Scherenantrieb, mittels dem der zweite Monitor befestigt ist, und ein vierter Scherenantrieb, mittels dem der vierte Monitor befestigt ist, sich ebenfalls in entgegengesetzter Richtung erstrecken. Auf diese Weise können Bilder in zwei entgegengesetzte Richtungen angezeigt werden.

Es sei darauf hingewiesen, dass die Steuerung in der Regel eingerichtet ist zum automatischen Bewegen der Monitore in eine Folge von Konfigurationen gemäß einem vorgegebenen Programm. Im Rahmen des Programms können die Monitore in drei, vier, fünf oder mehr Konfigurationen gebracht werden.

Vorzugsweise sind die Scherenantriebe in eine eingefahrene Position und eine ausgefahrene Position bringbar, wobei die Scherenantriebe der entsprechenden Monitor-Gruppe in der eingefahrene Position höchstens 25% des Hubs von der eingefahrenen Position entfernt sind. Der Hub ist die Differenz zwischen der ausgefahrenen Position und der eingefahrenen Position.

Unter einer Anordnung Seit-an-Seit wird insbesondere verstanden, das die Monitore mit ihrer schmalen Seite horizontal nebeneinander auf einer Höhe bündig angeordnet sind, wobei ein Abstand zwischen zwei benachbarten Monitoren höchstens ein 1/10, vorzugsweise höchstens 1/20, ihrer Breite beträgt. Unter der entgegengesetzten Richtung wird insbesondere verstanden, dass ein Winkel zwischen den beiden Richtungen 180° ± 10° beträgt. In der eingefahrenen Position haben die Scherenantriebe ihre minimale Länge, in der ausgefahrenen Position haben die Scherenantriebe ihre maximale Länge.

Besonders günstig ist es, wenn die Erstreckungsrichtung der Scherenantriebe mit der Horizontalen einen Winkel von höchstens 10° bildet, wenn die Monitore in der ersten Konfiguration sind.

Beispielsweise ist es möglich, dass die Monitore einer Monitor-Gruppe in der zweiten Konfiguration in vier Richtungen weisen, die zueinander in einem rechten Winkel angeordnet sind. Unter einem rechten Winkel wird insbesondere ein Winkel von 90° ± 5° verstanden. Weitere Konfigurationen sind in der Beschreibung zu den Figuren dargelegt.

Die Scherenantriebe sind vorzugsweise mit jeweils einem Fußabschnitt an der Basis, insbesondere an dem Segment befestigt. Vorzugsweise sind die Fußabschnitte von Scherenantrieben von Monitoren einer Monitor-Gruppe auf gleicher Höhe angeordnet.

Vorzugsweise sind die Scherenantriebe, die am zweiten Segment befestigt sind, und, sofern vorhanden, die Scherenantriebe, die am dritten Segment befestigt sind, so ausgebildet, dass eine Bewegung der Monitore nach unten ausgeschlossen ist. Das vermindert die Kollisionsgefahr der Monitore untereinander. Günstig ist es aus dem gleichen Grund, wenn die Scherenantriebe, die am ersten Segment und vorzugsweise auch der Scherenantreibe, die am zweiten Segment befestigt sind, so ausgebildet, dass eine Bewegung der Monitore nach oben ausgeschlossen ist.

Vorzugsweise haben die Monitore der zweiten Monitor-Gruppe von den Monitoren der dritten Monitor-Gruppe den geringstmöglichen horizontalen Abstand, wenn die Scherenantriebe sich in horizontaler Richtung erstrecken. Vorteilhaft daran ist, dass auch das die Kollisionsgefahr vermindert.

Vorzugsweise haben die Scherenantriebe in der eingefahrenen Position eine Baulänge, wobei das Monitorsystem zumindest einen Giermotor zum Gieren des zumindest einen Monitors um die Monitor-Schwenkachse aufweist und wobei die Baulänge und ein Winkelbereich des zumindest einen Giermotors so gewählt sind, dass ein Kontakt zwei benachbarter Monitore einer Monitor-Gruppe unabhängig von einer Gierwinkelstellung ausgeschlossen ist.

Vorzugsweise sind die Monitore bezüglich einer Schwenkbewegung um eine horizontale Schwenkachse drehstarr an der Basis befestigt.

Um die Kollisionswahrscheinlichkeit zweier Monitore weiterhin zu verringern sind die Monitore vorzugsweise bezüglich einer Drehbewegung um eine horizontale Rollachse drehstarr an der Basis befestigt. In anderen Worten können die Monitore keine Drehbewegung um die Rollachse ausführen.

Vorzugsweise ist die Steuerung so ausgebildet, dass eine simultane Nickbewegung der Scherenantriebe und einer Gier-Bewegung der Monitore ausgeschlossen ist.

Insbesondere ist die Steuerung so ausgebildet, dass die Drehfrequenzen der Motoren und damit beispielsweise der Segmente um die Basis, eine jeweils vorgegebene Maximal-Drehfrequenz nicht überschreitet.

Vorzugsweise ist die elektrische Steuerung ausgebildet zum automatischen Ansteuern der Scherenantriebe, sodass ein Schwerpunkt der Monitore der ersten Monitor-Gruppe, vorzugsweise aller Monitor-Gruppen, stets innerhalb der Basis liegt. So werden Kippmomente auf die Basis vermieden.

Erfindungsgemäß ist zudem ein Gebäude mit einem erfindungsgemäßen Monitorsystem, wobei die Basis an einer Decke des Gebäudes, an einem Mast oder an einem Fuß, der auf dem Boden steht, befestigt ist. Alternativ ist die Basis an einem Gestell befestigt, das beispielsweise temporär aufgestellt oder aufgehängt wird.

Im Folgenden wird die Erfindung anhand der beigefügten Zeichnungen näher erläutert. Dabei zeigt
- Figur 1: eine erfindungsgemäße Prinzipskizze eines Monitorsystems in einer Seitenansicht,
- Figur 2: eine schematische Ansicht des Monitorsystems gemäß Figur 1,
- Figur 3: eine schematische Ansicht von oben auf einen Monitor des Monitorsystems gemäß Figur 1,
- Figur 4: eine perspektivische Ansicht des Monitorsystems,
- Figur 5a: eine Prinzipskizze eines Giermotors des Monitorsystems,
- Figur 5b: eine Prinzipskizze des Scherenantriebs des Monitorsystems gemäß Figur 1, die
- Figuren 6a, 6b, 6c und 6d: zeigen das Monitorsystem in verschiedenen Konfigurationen,
- Figur 7: einen zeigt Querschnitt durch eine Segmenteinheit des erfindungsgemäßen Monitorsystems, die eine Gruppe an Monitoren enthält,
- Figur 8: eine perspektivische Teil-Ansicht der Segmenteinheit gemäß Figur 7,
- Figur 9: eine Schnittansicht der Segmenteinheit gemäß der Figuren 7 und 8,
- Figur 10: eine Seitenansicht des ersten Kurbeltriebs der Segmenteinheit,
- Figur 11: den zweiten Kurbeltrieb der Segmenteinheit und
- Figur 12: die Ansicht der Segmenteinheit gemäß Figur 8 mit weniger Bauteilen als in Figur 8.

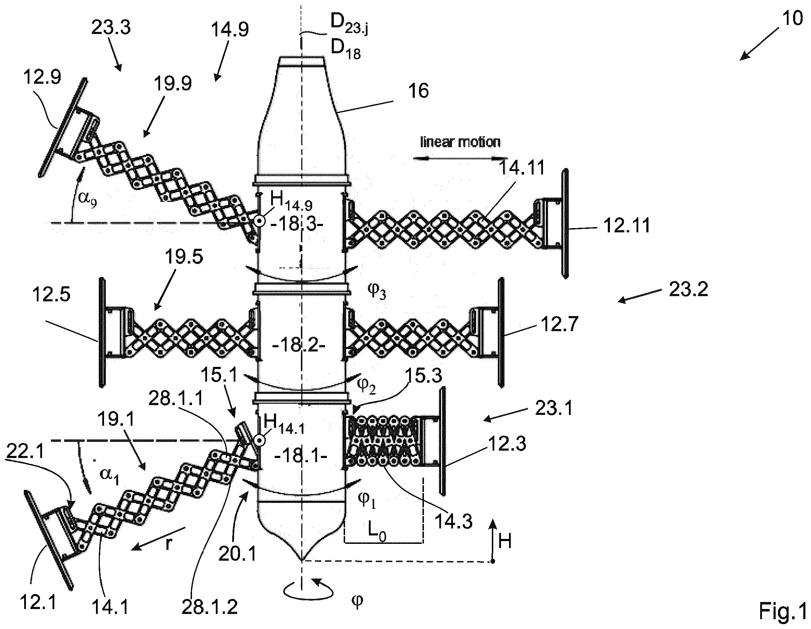

Figur 1 zeigt ein erfindungsgemäßes Monitorsystem 10, das eine Mehrzahl an Monitoren 12.i (i = 1, 2,..., N) aufweist. Die Zahl N der Monitore kann beispielsweise 16 betragen. In Figur 1 sind der Übersichtlichkeit halber die Monitore 12.2, 12.6 und 12.10 nicht eingezeichnet. Bezugszeichen ohne Zählsuffix beziehen sich auf jeweils alle entsprechenden Objekte. Die Monitore 12.i sind in je zumindest zwei Freiheitsgraden, vorliegend um drei Freiheitsgraden motorisch bewegbar an einer Basis 16 befestigt. Beispielsweise ist der Monitor 12.1 um einen Nickwinkel α₁ und einen Drehwinkel ϕ drehbar sowie in eine Längsrichtung r bewegbar.

Die Monitore, insbesondere der Monitor 12.1, sind mit jeweils einem Scherenantrieb 14.i an einer Basis 16 befestigt. Die Basis 16 ist im vorliegenden Fall abschnittsweise zylinderförmig.

In der in Figur 1 gezeigten Ausführungsform sind die Scherenantriebe 14 mittels jeweils eines Segmentes 18.1, 18.2 bzw. 18.3 an der Basis 16 befestigt. Die Segmente 18.j (j = 1, 2, 3) sind mittels eines nicht eingezeichneten Motors um die Basis 16 unabhängig voneinander drehbar. So ist das Segment 18.1 um einen Drehwinkel ϕ₁ um eine Vertikalachse D₁₈ um die Basis 16 drehbar, wobei dieser Drehwinkel ϕ₁ einem Drehwinkel ϕ₂ des zweiten Segments 18.2 entsprechen kann, dies ist aber nicht notwendig.

Jeder Scherenantrieb 14.i besitzt einen Scherenarm 19.i, der ein proximales Ende 20.i, mit dem er am jeweiligen Segment 18.j befestigt ist, sowie ein distales Ende 22.i, an dem der jeweilige Monitor 12.i befestigt ist, hat. Der Bereich des proximalen Endes 20.i kann auch als Fußabschnitt bezeichnet werden. Der Scherenantrieb des Monitors 12.3 ist in seiner eingefahrenen Position gezeigt, in der er eine Baulänge L₀ hat.

Jedes Segment 18.j bildet mit den daran befestigten Scherenantrieben 14.i eine Segmenteinheit 23.j (j = 1, 2, 3). Jede Segmenteinheit 23.5 ist um eine Segmenteinheit-Drehachse D_{23.j} drehbar. In der vorliegenden Ausführungsform sind alle Segmenteinheiten 23.j um eine gemeinsame Drehachse D₁₈ drehbar. Es ist aber auch möglich, dass die Segmenteinheit-Drehachsen D_{23.5} parallel, aber nicht koaxial verlaufen

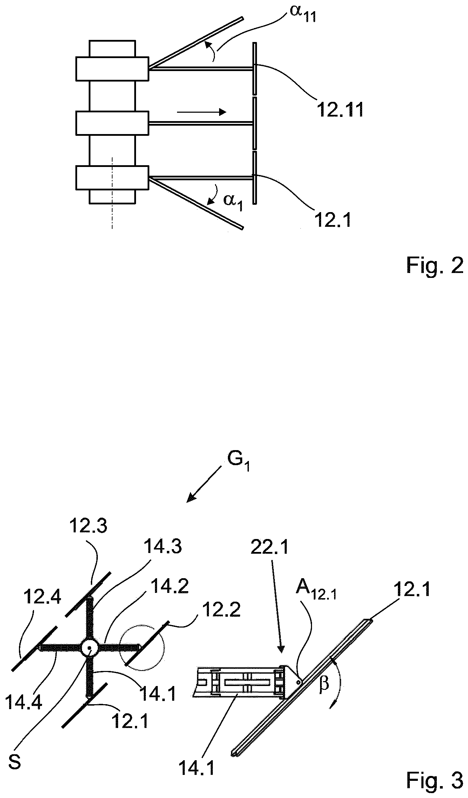

Figur 3 zeigt eine Ansicht von oben auf das Monitorsystem 10. Im rechten Teilbild ist zu erkennen, dass die Monitore 12.i, beispielsweise der Monitor 12.1, um einen Gierwinkel β um eine vertikale Monitor-Schwenkachse A_{12.1} mittels eines nicht eingezeichneten Giermotors schwenkbar sind.

Figur 3 zeigt zudem, dass die Monitore 12.1, 12.2, 12.3 sowie 12.4 eine erste Gruppe G1 bilden, die an einem ersten Segment 18.1 befestigt sind. Flächenweise bilden die Monitore 12.5, 12.6, 12.7 und 12.8, die am zweiten Segment 18.2 befestigt sind, eine zweite Gruppe G2 und die Monitore 12.9., 12.10, 12.11 und 12.12, die am dritten Segment 18.3 befestigt sind, eine dritte Gruppe G3. Durch Drehen des jeweiligen Segmentes 18.j ist jede der Gruppen Gj kollektiv an der Basis um die horizontale Drehachse D₁₈ drehbar befestigt. Alle Monitore einer Gruppe sind vorzugsweise auf der gleichen axialen Höhe H angeordnet.

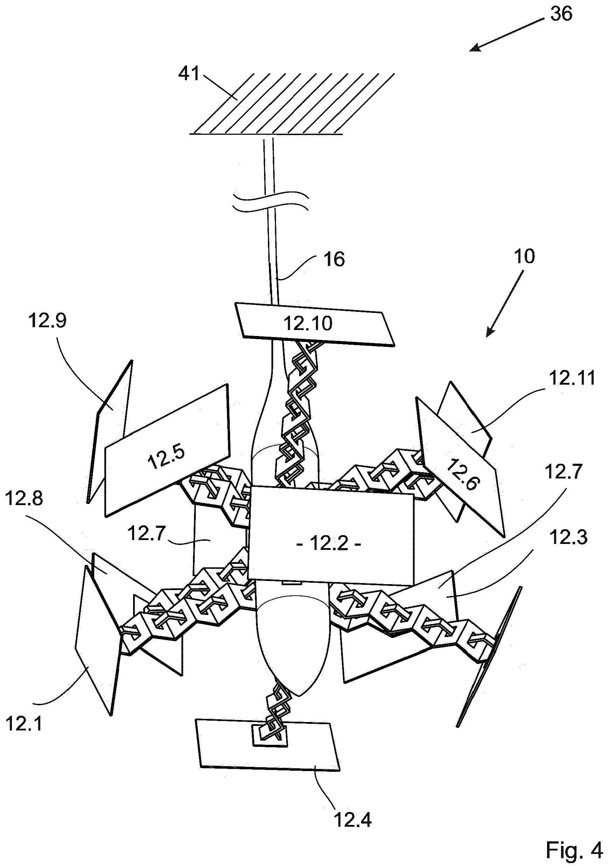

Figur 4 zeigt eine perspektivische Ansicht des Monitorsystems 10 gemäß der Figuren 1 bis 3.

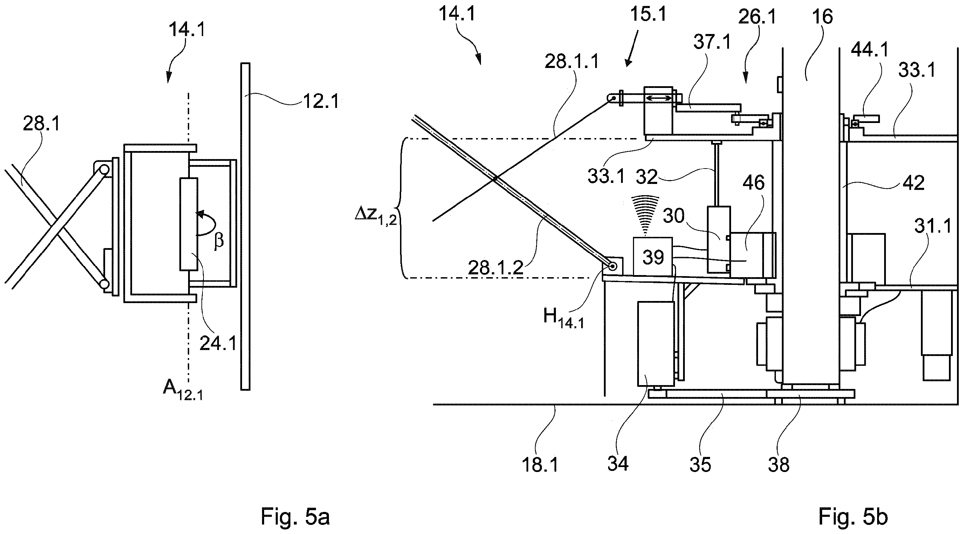

Figur 5a zeigt in einer Teilansicht die Befestigung des Monitors 12.1 am Scherenantrieb 14.1. Alle Monitore sind auf gleiche Weise am jeweiligen Scherenantrieb befestigt. Es ist zu erkennen, dass ein Giermotor 24.1 vorhanden ist, um den Monitor 12.1 um die Monitorschwenkachse A₁₂ zu schwenken.

Figur 5b zeigt eine schematische Ansicht des Scherenantriebs 14.1. Figur 1 zeigt, dass jeder Scherenantrieb 14i, beispielsweise der Scherenantrieb 14.1, eine Mehrzahl an Scherensegmenten 28.1.1, 28.1.2, ... aufweist, die miteinander so verbunden sind, dass sie relativ zueinander schwenken können. Ein Elektromotor 30 bewegt über eine Schubstange 32 und eine erste Plattform 33.1, im vorliegenden Fall in Form einer Scheibe, in axialer Richtung relativ zu einer zweiten Plattform 31.1, die im vorliegenden Fall ebenfalls durch eine Scheibe gebildet ist. An der ersten Plattform 31.1 ist ein Scherensegment, im vorliegenden Fall das Scherensegment 28.1.1 befestigt. Wird die Schubstange 32 ausgefahren, so bewegt sich daher der Monitor 12.1 (vergleiche Figur 1) auf die Basis 16 zu. Ein Schwenkmotor 26 ermöglicht ein Verändern des Nickwinkels α des jeweiligen Schwenkantriebs.

Durch eine Änderung eines ersten axialen Abstands Δz_{1,2} zwischen der ersten Plattform 31.1 und der zweiten Plattform 33.1, also eine translatorische Bewegung der Plattformen relativ zueinander, ändert sich eine Auskraglänge der mit den Plattformen verbundenen Scherenantriebe.

An der Plattform 33.1 sind alle Fußabschnitte 15.1 bis 15.4 der Scherenantriebe 14.1 bis 14.4 des Segments 18.1 befestigt. Damit wird eine synchrone Längenänderung aller Scherenantriebe 14.i des Segments 18.1 und damit einer Ebene mit einem einzigen Antrieb erreicht. Dieser Aufbau bedingt eine konstruktive Sicherheit. Alle Scherenantriebe 14.i des ersten Segments 18.1 haben aufgrund der mechanischen Kopplung stets die gleiche Länge. Sollte der Motor 30 ausfallen, kann dennoch keine Unwucht entstehen. Die Scherenantriebe der Segmente 18.2 und 18.3 sind ebenfalls mittels genau eines Elektromotors ein- und ausfahrbar.

Ein zweiter Elektromotor 34, kämmt mit einem Zahnkranz 35, der an der Basis 16 befestigt ist. Wird der zweite Elektromotor 34 betätigt, so dreht sich daher das erste Segment 18.1.

Um alle Scherenantriebe 14.1 bis 14.4 des ersten Segments 18.1 um jeweils den gleichen Nickwinkel α zu schwenken, ist jeder Fußabschnitt 15.i eines Scherenantriebs 14.i an je einem zugeordneten Schieber 37.1 befestigt. Dreht ein dritter Elektromotor 46 eine Hülse 42 mit Außenverzahnung, so dreht sich eine zweite Scheibe 44.1 relativ zur ersten Scheibe 33.1. Der Schieber 37.1 greift mit einem Ende wie ein Kulissenstein in eine Ausnehmung in der zweiten Scheibe 44 ein. Das Ende des Schiebers 37.1 wird durch die Ausnehmung radial auswärts bewegt, sodass der Monitor 12.1 (vgl. Figur 1) um eine Horizontalachse H_{14.1} nach unten schwenkt. Da alle Fußabschnitte 15.i (i=1, ... ,4) der Scherenantriebe 14.i des ersten Segments 18.1 auf die gleiche Weise befestigt sind, schwenken alle Monitore 12.1 des ersten Segments 18.1 um den gleichen Nickwinkel α nach unten.

Die Scherenantriebe 14.5 bis 14.8 des zweiten Segments 18.2 sind nicht zu einer Nickbewegung in der Lage. Die Scherenantriebe 14.9 bis 14.12 des dritten Segments 18.3 besitzen einen Nickantrieb, der nur eine Bewegung nach oben ermöglicht. Dieser ist beispielsweise symmetrisch zum oben beschriebenen Antrieb für die Scherenantriebe 14.1 bis 14.4 ausgebildet.

In Figur 5b ist schematisch eine elektrische Steuerung 39 eingezeichnet, die mit allen Motoren des Segments 18.1 zum Ansteuern verbunden ist. Die Steuerung 39 besitzt einen digitalen Speicher, in dem ein Bewegungsprogramm - und gegebenenfalls auch Filme oder Bilder zum Darstellen auf den Monitoren 12.i - gespeichert sind. Vorzugsweise ist die Steuerung 39 mit weiteren Steuerungen verbunden, beispielsweise per Funkverbindung. Es ist auch möglich, dass eine zentrale elektrische Steuerung vorhanden ist, die alle Motoren aller Segmente und die Monitore ansteuert.

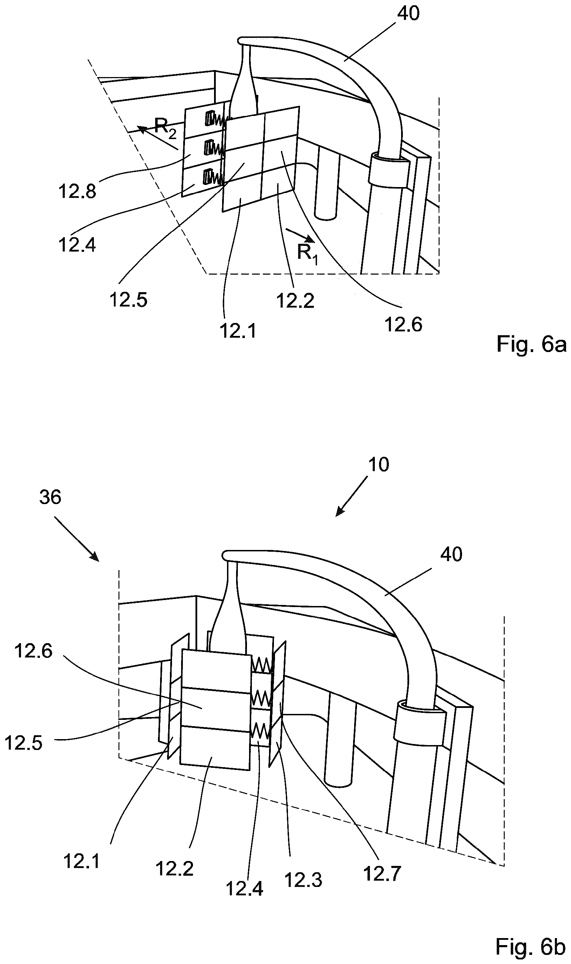

Figur 6a zeigt die Monitore in einer ersten Konfiguration. Es ist zu erkennen, dass jeweils 6 Monitore eine 2x3-Matrix bilden, wobei die Monitore 12.1 und 12.2 Seit-an-Seit angeordnet sind und in eine erste Richtung R1 weisen. Die Monitore 12.3 und 12.4 weisen in eine zweite Richtung R2, die der ersten Richtung R1 entgegengesetzt ist und sind ebenfalls Seit-an-Seit angeordnet. Wie Figur 3 im linken Teilbild zu entnehmen ist, erstrecken sich die Scherenantriebe 14.1 und 14.3 jeweils in entgegengesetzte Richtungen. Das gleiche gilt für die Scherenantriebe 14.2 und 14.4.

Das Monitorsystem 10 ist in einem Gebäude 36 angeordnet und hängt an einem Masten 40. Alternativ kann das Monitorsystem 10 - wie in Figur 4 gezeigt - an einer Decke 41 des Gebäudes hängen.

Figur 6b zeigt eine zweite Konfiguration, bei der jeweils drei Monitore übereinander angeordnet sind und gemeinsam in eine Richtung weisen. Die so entstehenden vier Richtungen stehen senkrecht aufeinander.

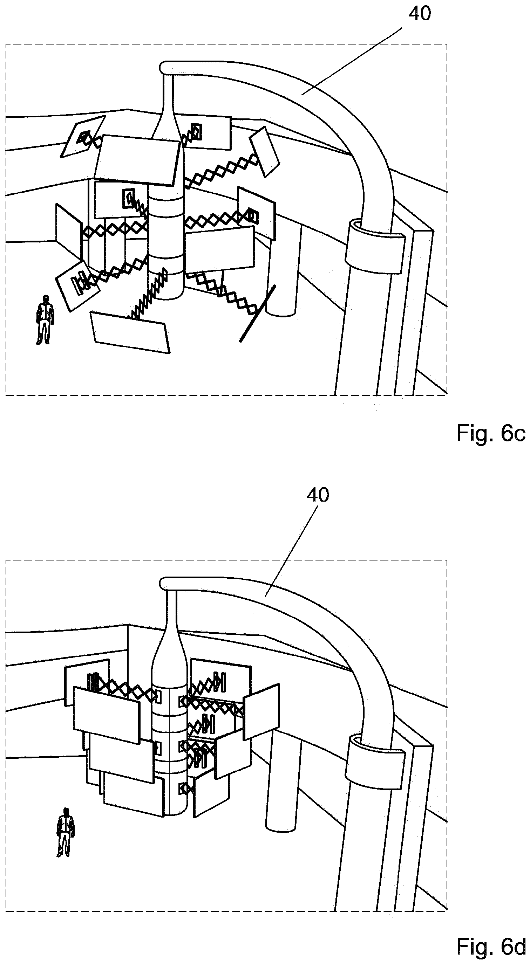

Figur 6c zeigt eine weitere Anordnung, bei der die Scherenantriebe maximal ausgefahren sind und alle Monitore in unterschiedliche Richtungen zeigen.

Figur 6d zeigt eine weitere Konfiguration, bei der die Monitore jeweils weiter ausgefahren sind, je höher sie angeordnet sind.

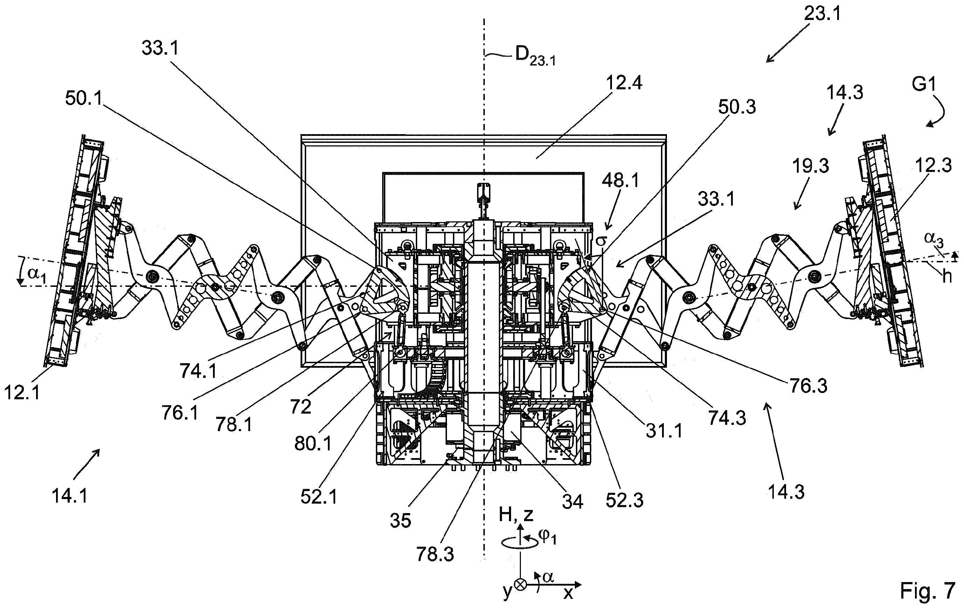

Figur 7 zeigt die Segmenteinheit 23.1, die die erste Gruppe G1 der Monitore 12.1, 12.2, 12.3 und 12.4 umfasst, wobei der Monitor 12.3 nicht eingezeichnet ist. Alle Monitore 12.i sind um die Drehachse D_{23.1} drehbar.

Die Scherenantriebe 14.i (i =1, 2, 3, 4) besitzen eine gemeinsame erste Antriebseinheit 48, die weiter unten genau beschrieben ist. Da die Scherenantriebe 14.i baugleich sind, wird auf eine Beschreibung der nicht eingezeichneten Scherenantriebe verzichtet.

Jeder Scherenantrieb 14.i hat einen ersten Fußpunkt 50.i, der am proximalen Ende des jeweiligen Scherenarms 19. i ausgebildet ist. Der entsprechende Scherenarm 19.i ist mittels des ersten Fußpunkts 50.i an der ersten Plattform 33.1 befestigt. Mit einem jeweiligen zweiten Fußpunkt 52.i bewegt sich die erste Plattform 33.1 in axialer Richtung, das heißt entlang der Drehachsen D_{23.1} auseinander, so bewegen sich die jeweiligen Fußpunkte 50.i, 52.i auseinander und der entsprechende Scherenarm 19.i wird eingefahren.

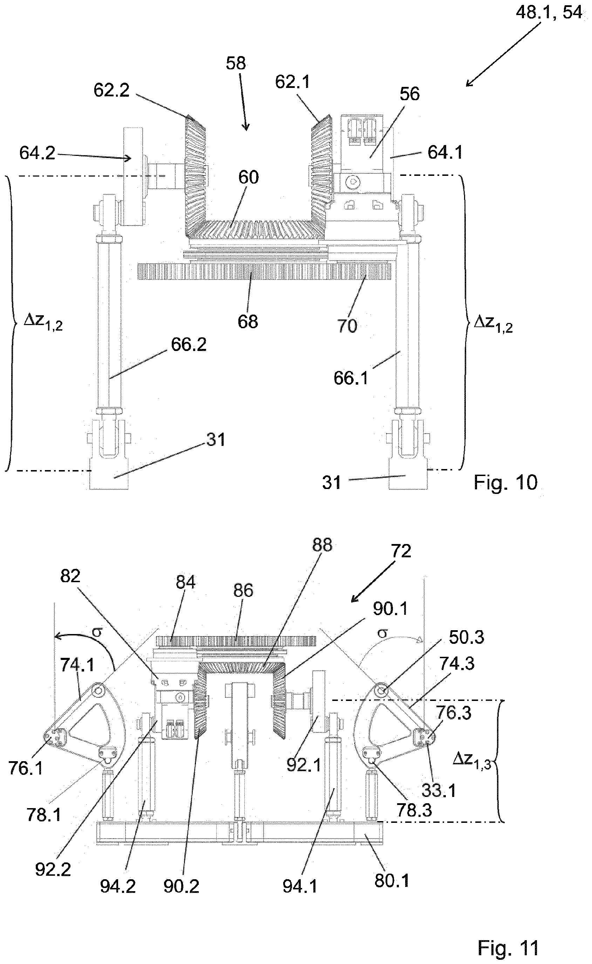

Figur 10 zeigt Details der Antriebseinheit 48.1, die einen ersten Antrieb in Form eines ersten Kurbeltriebs 54 aufweist. Der erste Kurbeltrieb 54 besitzt einen ersten Elektromotor 56, der an der ersten Plattform 33.1 (vgl. Figur 7) befestigt ist. Der erste Kurbeltrieb 54 besitzt zudem ein erstes Kegelradgetriebe 58, das ein erstes Tellerrad 60, ein erstes Erstkurbeltrieb-Kegelrad 62.1 und ein zweites Erstkurbeltrieb-Kegelrad 62.2 umfasst. Eine erste Erstkurbeltrieb-Kurbel 64.1 ist drehstarr mit dem ersten Erstkurbeltrieb-Kegelrad 62.1 verbunden. Eine zweite Erstkurbeltrieb-Kurbel 64.2 ist drehstarr mit dem zweiten Erstkurbeltrieb-Kegelrad 62.2 verbunden. An den jeweiligen Erstkurbeltrieb-Kurbeln 64.1, 64.2 ist jeweils ein Erstkurbeltrieb-Pleuel 66.1 bzw. 66.2 mit jeweilig einem ersten Ende befestigt. Das jeweilige zweite Ende ist mit der zweiten Plattform 31.1 verbunden.

Das erste Tellerrad 60 wird von einem ersten Stirnrad 68 angetrieben, das wiederum mit einem Abtriebs-Zahnrad 70 des ersten Elektromotors 56 kämmt. Wird der Elektromotor 56 betätigt, so drehen sich das erste Tellerrad 60 und damit die Erstkurbeltrieb-Kurbeln 64.1, 64.2. Dadurch ändert sich ein erster axialer Abstand Δz_{1,2} zwischen der ersten Plattform 31.1 und der zweiten Plattform 33.1.

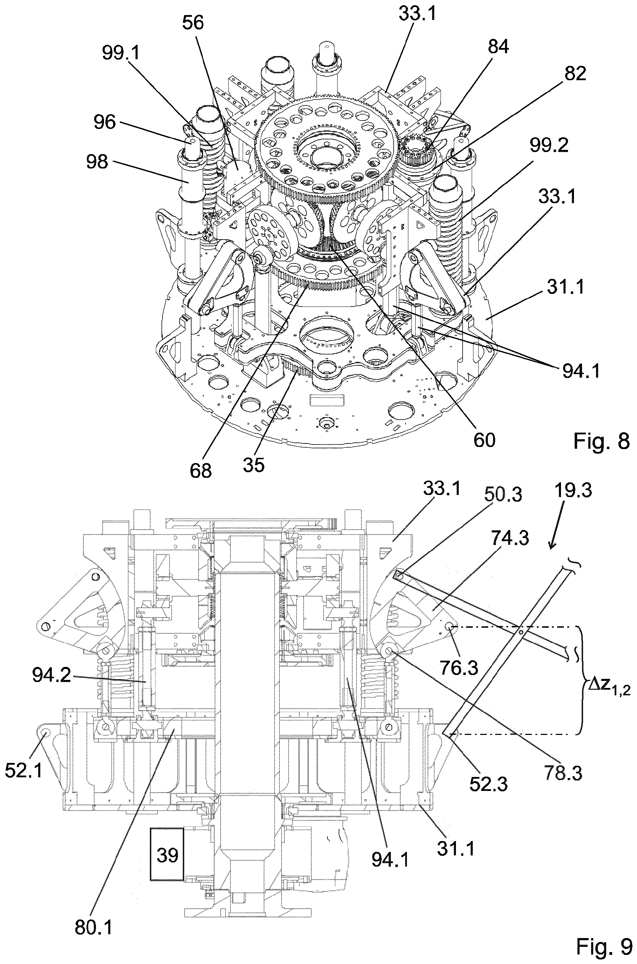

Figur 9 zeigt, dass eine Änderung des axialen Abstands Δz_{1,2} dazu führt, dass sich die Auskraglänge der Scherenarme 19.i ändert.

Figur 7 zeigt, dass die erste Antriebseinheit 48.1 einen zweiten Antrieb in Form eines zweiten Kurbeltriebs 72 aufweist, mittels dem die Schwenkhebel 74.i in ihrem Schwenkwinkel σ verändert werden können. Die Schwenkhebel 74.i sind in jeweils einem ersten Anlenkpunkt 76.i mit der ersten Plattform 33.1 schwenkbar verbunden. Eine zweiter Anlenkpunkt 78.i ist mit einer dritten Plattform 80.1 verbunden. Wird der Elektromotor 56 betätigt, so ändert sich daher die axiale Position der Anlenkpunkte 76.i relativ zur ersten Plattform 31.1.

Figur 11 zeigt den zweiten Antrieb 72 im Detail. Es ist zu erkennen, dass der zweite Kurbeltrieb 72 einen zweiten Elektromotor 82 aufweist, der an der ersten Plattform 33.1 (vgl. Figur 8) befestigt ist. Ein zweites Abtriebs-Zahnrad 84 des zweiten Elektromotors 82 kämmt mit einem zweiten Stirnrad 86, das mit einem zweiten Tellerrad 88 drehstarr verbunden ist.

Das zweite Tellerrad 88 kämmt mit zwei Zweitkurbeltrieb-Kegelrädern 90.1, 90.2, die ihrerseits drehfest mit jeweiligen Zweitkurbeltrieb-Kurbeln 92.1, 92.2 verbunden sind. Die Zweitkurbeltrieb-Kurbeln 92.1, 92.2 sind ihrerseits mit jeweiligen ersten Enden von Zweitkurbeltrieb-Pleueln 94.1, 94.2 verbunden, die mit ihrem jeweiligen zweiten Ende mit der dritten Plattform 80.1 verbunden sind. Dreht sich das zweite Stirnrad 86, verändert sich ein zweiter Abstand Δz_{1,3} zwischen der ersten Plattform und der dritten Plattform 80.1.

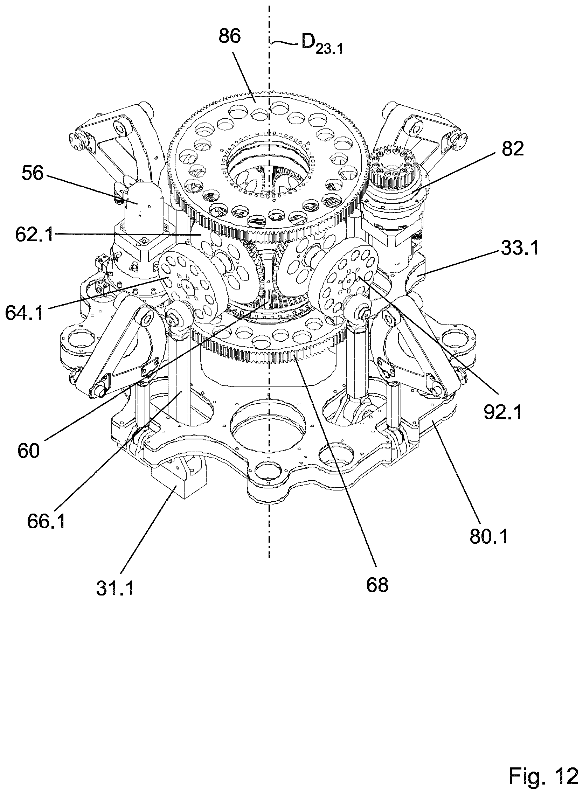

Figur 12 zeigt, dass ein Betätigen des ersten Elektromotors 56 dazu führt, dass sich das Stirnrad 68 dreht, wodurch sich die Erstkurbeltrieb-Kurbel 64.1 und die gegenüberliegende zweite, in Figur 12 nicht sichtbare zweite Erstkurbeltrieb-Kurbel drehen.

Die zweite Plattform 31.1 ist in axialer Richtung entlang der Drehachse D_{23.1} unverschieblich ausgebildet. Wird daher der erste Elektromotor 56 betätigt, bewegt sich die erste Plattform 33.1 im vorliegenden Fall nach unten. Dadurch werden die Scherenantriebe 14 (vgl. Figur 7) ausgefahren. Der Nickwinkel α (vgl. Figur 1) hingegen ändert sich nur wenig. Der erste Elektromotor 56 und der zweite Elektromotor 82 sind mit der Steuerung 39 (vgl. Figur 9) verbunden. Die Steuerung ist so ausgebildet, dass das Ausfahren der Monitore auf einem geradlinigen Pfad möglich ist. Zudem ist die Steuerung so ausgebildet, dass eine Nickbewegung der Monitore ohne Änderung der Auskraglänge möglich ist.

Wird der zweite Elektromotor 82 betätigt, drehen sich die Zweitkurbeltrieb-Kurbel 92.1 und die in Figur 12 nicht sichtbare zweite Zweitkurbetrieb-Kurbel 92.2. Dadurch bewegt sich die dritte Plattform 80.1 relativ zur ersten Plattform 33.1 und der Schwenkwinkel σ (vgl. Figur 7) verändert sich. Dadurch verändert sich der Nickwinkel α, und im vorliegenden Fall damit verbunden auch die Scherenlänge. Diese Kopplung kann bei geeigneter Wahl der Bewegungsräume genutzt werden, um Kollision zu verhindern. Über eine Kinematik werden die Bewegungskurven berechnet und somit eine entkoppelte Monitorbewegung ermöglicht. Vorzugsweise sind die Schenkantriebe so ausgebildet, dass ein Nicken aus der horizontalen Erstreckungsrichtung dazu führt, dass sich die Auskraglänge erhöht.

Die extremen Positionen, die die Plattform relativ zueinander einnehmen können, werden durch die oberen und unteren Totpunkte der Kurbeln 64.1, 64.2, 92.1, 92.2 bestimmt. Auf diese Weise kann das Intervall der Nickwinkel αⱼ festgelegt werden. Wie in Figur 1 gezeigt, ist es günstig, wenn die Monitore der untersten, nämlich der ersten Gruppe G1 lediglich aus der Horizontale nach unten geschwenkt werden können und die Monitore der obersten, nämlich der dritten Gruppe G3 lediglich nach oben geschwenkt werden können. Auf diese Weise werden Kollisionen zwischen den Monitoren ausgeschlossen.

Dadurch, dass die Kurbeltriebe die möglichen Nickwinkel α effektiv begrenzen, ist das Monitorsystem 10 eigensicher. Es sei darauf hingewiesen, dass es möglich, nicht aber notwendig ist, dass drei Monitorgruppen vorhanden sind. Insbesondere kann auch lediglich eine einzige Monitorgruppe vorhanden sein, auch zwei, drei oder vier Monitorgruppen sind möglich.

Figur 8 zeigt, dass mittels einer Führungssäule 96, die in einer Führungshülse 98 läuft, ein Verdrehen der Plattformen gegeneinander verhindert wird und nur eine rein translatorische Bewegung möglich ist. Federn 99.1, 99.2 dienen als Energiespeicher für eine Bewegung der ersten Plattform relativ zur dritten Plattform und verringern das maximal aufzubringende Drehmoment der entsprechenden Antriebe.

Optionale weitere Federn, die nicht eingezeichnet sind, dienen als Energiespeicher für eine Bewegung der ersten Plattform relativ zur zweiten Plattform.

**Bezugszeichenliste:**

| | | | |
|---|---|---|---|
| 10 | Monitorsystem | 50 | erster Fußpunkt |
| 12 | Monitor | 52 | zweiter Fußpunkt |
| 14 | Scherenantrieb | 54 | erster Antrieb, erster Kurbeltrieb |
| 15 | Fußabschnitt | 56 | erster Elektromotor |
| 16 | Basis | 58 | erstes Kegelradgetriebe |
| 18 | Segment | | |
| 19 | Scherenarm | 60 | erstes Tellerrad |
| | | 62 | Erstkurbeltrieb-Kegelrad |
| 20 | proximales Ende | 64 | Erstkurbeltrieb-Kurbel |
| 22 | distales Ende | 66 | Erstkurbeltrieb-Pleuel |
| 23 | Segmenteinheit | 68 | erstes Stirnrad |
| 24 | Giermotor | | |
| 26 | Schwenkantrieb | 70 | Abtriebs-Zahnrad |
| 28 | Scherensegment | 72 | zweiter Antrieb, zweiter Kurbeltrieb |
| 30 | Elektromotor | | |
| 31 | zweite Plattform | 74 | Schwenkhebel |
| 32 | Schubstange | 76 | erster Anlenkpunkt |
| 33 | erste Plattform, Scheibe | 78 | zweiter Anlenkpunkt |
| 34 | zweiter Elektromotor | | |
| 35 | Zahnkranz | 80 | dritte Plattform |
| 36 | Gebäude | | |
| 37 | Schieber | 82 | zweiter Elektromotor |
| 39 | elektrische Steuerung | 84 | zweites Abtriebszahnrad |
| | | 86 | zweites Stirnrad |
| 40 | Mast | 88 | zweites Tellerrad |
| 41 | Decke | | |
| 42 | Hülse | 90 | Zweitkurbeltrieb-Kegelrad |
| 44 | zweite Scheibe | 92 | Zweitkurbeltrieb-Kurbel |
| 46 | dritter Elektromotor | 94 | Zweitkurbeltrieb-Pleuel |
| 48 | Antriebseinheit | 96 | Führungssäule |
| | | 98 | Führungshülse |
| α | Nickwinkel | G | Gruppe |
| β | Gierwinkel | h | Horizontale |
| ϕ | Drehwinkel | H | axiale Höhe |
| σ | Schwenkwinkel | H_{14.i} | Horizontalachse |
| | | | |
| Δz_{1,2} | erster axialer Abstand | i, j | Laufindex |
| Δz_{1,3} | zweiter axialer Abstand | L₀ | Baulänge |
| | | N | Zahl der Monitore |
| A₁₂ | Monitor-Schwenkachse | r | Längsrichtung, radiale Richtung |
| D₁₈ | Vertikalachse, Segment-Drehachse | R | Richtung |
| | | S | Schwerpunkt |

## Patentansprüche

1. Monitorsystem (10) mit
(a) einem ersten Monitor (12.1),
(b) einem zweiten Monitor (12.2),
(c) einem dritten Monitor (12.3),
(d) zumindest einem vierten Monitor (12.4) und
(e) einer Basis (16),
(f) wobei die Monitore (12.i) in je zumindest zwei Freiheitsgraden motorisch bewegbar an der Basis (16) befestigt sind, **dadurch gekennzeichnet, dass**
(g) zumindest zwei Monitore (12.1, 12.3) mittels Scherenantrieben (14.1) an der Basis (16) befestigt sind,
(h) zumindest drei Monitore (12.1, 12.2, 12.3) eine erste Monitor-Gruppe (G1) bilden und um eine gemeinsame Segment-Drehachse (D23.1) drehbar montiert und mittels jeweils eines Scherenantriebs (14.1, 14.2, 14.3) motorisch bewegbar sind,
(i) wobei alle diese Scherenantriebe (14.1, 14.2, 14.3) eine gemeinsame erste Antriebseinheit (48.1) haben.

2. Monitorsystem (10) nach Anspruch 1, **dadurch gekennzeichnet, dass**
(a) der Scherenantrieb (14.1) einen Scherenarm (19) hat und
(b) der einen Scherenarm (19)
- mit einem proximalen Ende (20.1) an der Basis (16) befestigt ist,
- ein distales Ende (22.1) aufweist, an dem der Monitor (12.1) befestigt ist, und/oder dass
(c) der Monitor (12.1) um eine Monitor-Schwenkachse (A12.1) schwenkbar an dem distalen Ende (22.1) befestigt ist.

3. Monitorsystem (10) nach einem der vorstehenden Ansprüche, **dadurch gekennzeichnet, dass** der zumindest eine Monitor (12.1) mittels des Scherenantriebs (14.1) um eine horizontale Schwenkantrieb-Schwenkachse (H_{14.1}) schwenkbar an der Basis (16) befestigt ist.

4. Monitorsystem (10) nach einem der vorstehenden Ansprüche, **gekennzeichnet durch**
(a) eine erste Monitor-Gruppe (G1), die zumindest drei Monitore (12.1, 12.2, 12.3, 12.4) aufweist, die kollektiv drehbar an der Basis (16) befestigt sind,
(b) eine zweite Monitor-Gruppe (G2), die zumindest drei Monitore (12.5, 12.6, 12.7, 12.8) aufweist, die kollektiv drehbar an der Basis (16) befestigt sind, und
(c) eine dritte Monitor-Gruppe (G3), die zumindest drei Monitore (12.9, 12.10, 12.11, 12.12) aufweist, die kollektiv drehbar an der Basis (16) befestigt sind,
(d) wobei das Monitorsystem (10)
ein erstes Segment (18.1),
- das um eine Vertikalachse (D₁₈) automatisch drehbar an der Basis (16) befestigt ist und
- an dem die Monitore (12) der ersten Monitor-Gruppe (G1) befestigt sind,
(e) ein zweites Segment (18.2),
- das um die Vertikalachse (D₁₈) automatisch drehbar an der Basis (16) befestigt ist,
- an dem die Monitore (12) der zweiten Monitor-Gruppe (G2) befestigt sind und
- das oberhalb des ersten Segments (18.1) angeordnet ist, und
(f) ein drittes Segment (18.3),
- das um die Vertikalachse (D₁₈) drehbar an der Basis (16) befestigt ist,
- an dem die Monitore (12) der dritten Monitor-Gruppe (G3) befestigt sind und
- das oberhalb des zweiten Segments (18.2) angeordnet ist,
aufweist.

5. Monitorsystem (10) nach einem der vorstehenden Ansprüche, **dadurch gekennzeichnet, dass**
(a) die erste Antriebseinheit (48.1) einen ersten Antrieb (54), insbesondere einen ersten Kurbeltrieb (54), aufweist,
mittels dem ein erster axialer Abstand (Δz_{1,2}) einer ersten Plattform (33.1) von einer zweiten Plattform (31.1) veränderbar ist, und
(b) die Scherenantriebe (14.1, 14.2, 14.3, 14.4) mit
jeweils einem ersten Fußpunkt (50.1, 50.2, 50.3, 50.4) ihres Scherenarms (19.1, 19.2, 19.3, 19.4) mit der ersten Plattform (33.1) verbunden sind und mit jeweils einem zweiten Fußpunkt (52.1, 52.2, 52.3, 52.4) ihres Scherenarms (19.1, 19.2, 19.3, 19.4) mit der zweiten Plattform (31.1) verbunden sind, sodass mittels des ersten Kurbeltriebs (54) die Scherenarme (19.1, 19.2, 19.3, 19.4) ein- und ausfahrbar sind.

6. Monitorsystem (10) nach einem der vorstehenden Ansprüche, **dadurch gekennzeichnet, dass**
(a) die Scherenarme (19.1, 19.2, 19.3, 19.4) mit ihrem jeweiligen ersten Fußpunkt (50.1, 50.2, 50.3, 50.4) mittels eines jeweiligen Schwenkhebels (74.1, 74.2, 74.3, 74.4) mit der ersten Plattform (33.1) verbunden sind,
(b) die erste Antriebseinheit (48) einen zweiten Antrieb, insbesondere einen zweiten Kurbeltrieb (72), aufweist, mittels dem ein Schwenkwinkel (σ) der Schwenkhebel (74.1, 74.2, 74.3, 74.4) veränderbar ist, sodass die Scherenantriebe (14.1, 14.2, 14.3, 14.4) kollektiv um einen Nickwinkel (α) schwenkbar sind.

7. Monitorsystem (10) nach einem der vorstehenden Ansprüche, **gekennzeichnet durch**
(a) eine dritte Plattform (80.1, rot),
(b) wobei die Schwenkhebel (74.1, 74.2, 74.3, 74.4) an der dritten Plattform (80.1 rot) angelenkt sind und
(c) wobei mittels des zweiten Kurbeltriebs (72) ein zweiter axialer Abstand (Δz_{1,3}) zwischen der dritten Plattform (80.1 rot) und der ersten Plattform (33.1) veränderbar ist und
(d) wobei durch Verändern des zweiten axialen Abstands (Δz_{1,3}) der Schwenkwinkel (σ) veränderbar ist.

8. Monitorsystem (10) nach einem der vorstehenden Ansprüche, **dadurch gekennzeichnet, dass**
(a) der erste Kurbeltrieb (54)
(i) einen ersten Elektromotor (56),
der an der ersten Plattform (33.1) befestigt ist,
(ii) ein erstes Kegelradgetriebe (58), das
- ein erstes Tellerrad (60),
- ein erstes Erstkurbeltrieb-Kegelrad (62.1) und
- ein zweites Erstkurbeltrieb-Kegelrad (62.2) hat,
(iii) eine erste Erstkurbeltrieb-Kurbel (64.1), die mit dem ersten Erstkurbeltrieb-Kegelrad (62.1) drehfest verbunden ist, und
(iv) eine zweite Erstkurbeltrieb-Kurbel (64.2), die mit dem zweiten Erstkurbeltrieb-Kegelrad (62.2) drehfest verbunden ist, hat,
(v) ein erstes Erstkurbeltrieb-Pleuel (66.1),
das mit einem ersten Ende mit der ersten Erstkurbeltrieb-Kurbel (64.1) und mit einem zweiten Ende mit der zweiten Plattform (31.1) verbunden ist, und
(vi) ein zweites Erstkurbeltrieb-Pleuel (66.2),
das mit einem ersten Ende mit der zweiten Erstkurbeltrieb-Kurbel (64.2) und mit einem zweiten Ende mit der zweiten Plattform (33.1) verbunden ist,
(b) der erste Elektromotor (56) mit dem ersten Tellerrad (60) zum Antreiben verbunden ist, sodass die Erstkurbeltrieb-Kurbeln (64.1, 64.2) mittels des ersten Elektromotors (56) drehbar sind und dass
(c) die Erstkurbeltrieb-Kurbeln (64.1, 64.2) so mit den jeweiligen Kegelrädern verbunden sind, dass die erste Erstkurbeltrieb-Kurbel (64.1)genau dann in ihrem oberen Totpunkt ist, wenn die zweite Erstkurbeltrieb-Kurbel (64.2) in ihrem oberen Totpunkt ist und dass die erste Erstkurbeltrieb-Kurbel (64.1) genau dann in ihrem unteren Totpunkt ist, wenn die zweite Erstkurbeltrieb-Kurbel (64.2) in ihrem unteren Totpunkt ist.

9. Monitorsystem (10) nach einem der vorstehenden Ansprüche, **dadurch gekennzeichnet, dass**
(a) der zweite Kurbeltrieb (72)
(i) einen zweiten Elektromotor (82),
(ii) ein zweites Kegelradgetriebe, das
- ein zweiten Tellerrad (88),
- ein erstes Zweitkurbeltrieb-Kegelrad (90.1) und
- ein zweites Zweitkurbeltrieb-Kegelrad (90.2) hat,
(iii) eine erste Zweitkurbeltrieb-Kurbel (92.1), die mit dem ersten Zweitkurbeltrieb-Kegelrad (90.1) drehfest verbunden ist, und
(iv) eine zweite Zweitkurbeltrieb-Kurbel (92.2), die mit dem zweiten Zweitkurbeltrieb-Kegelrad (90.2) drehfest verbunden ist, hat,
(v) ein erstes Zweitkurbeltrieb-Pleuel (94.1),
das mit einem ersten Ende mit der ersten Zweitkurbeltrieb-Kurbel (92.1) und mit einem zweiten Ende mit der dritten Plattform (80.1) verbunden ist, und
(vi) ein zweites Zweitkurbeltrieb-Pleuel (94.2),
das mit einem ersten Ende mit der zweiten Zweitkurbeltrieb-Kurbel (92.2) und mit einem zweiten Ende mit der dritten Plattform (80.1) verbunden ist,
(b) der zweite Elektromotor (82) mit dem zweiten Tellerrad (88) zum Antreiben verbunden ist, sodass die Zweitkurbeltrieb-Kurbeln (92.1, 92.2) mittels des zweiten Elektromotors (82) drehbar sind und dass
(c) die Zweitkurbeltrieb-Kurbeln (92.1, 92.2) so mit den jeweiligen Kegelrädern verbunden sind, dass die erste Zweitkurbeltrieb-Kurbel (92.1) genau dann in ihrem oberen Totpunkt ist, wenn die zweite Zweitkurbeltrieb-Kurbel (92.2) in ihrem oberen Totpunkt ist und dass die erste Zweitkurbeltrieb-Kurbel (92.1) genau dann in ihrem unteren Totpunkt ist, wenn die zweite Zweitkurbeltrieb-Kurbel (92.2) in ihrem unteren Totpunkt ist.

10. Monitorsystem (10) nach einem der vorstehenden Ansprüche, **gekennzeichnet durch** eine elektrische Steuerung (39), die eingerichtet ist zum automatischen Durchführen eines Verfahrens mit den Schritten:
(i) Bewegen der Monitore (12) aus einer ersten Konfiguration in eine zweite Konfiguration und/oder
(ii) Drehen zumindest eines Segments (18) um die Vertikalachse (D₁₈).

11. Monitorsystem (10) nach einem der vorstehenden Ansprüche, **dadurch gekennzeichnet, dass**
(a) in der ersten Konfiguration in zumindest einer Monitor-Gruppe (G1, G2, G3)
- ein erster Monitor (12.1) und ein zweiter Monitor (12.2) Seit-an-Seit angeordnet sind, wobei die Monitore (12) in eine erste Richtung (R1) weisen,
- ein dritter Monitor (12.3) und ein vierter Monitor (12.4) Seit-an-Seit angeordnet sind, wobei die Monitore (12) in eine zweite Richtung (R2) weisen, die der ersten Richtung (R1) entgegengesetzt ist,
- ein erster Scherenantrieb (14), mittels dem der erste Monitor (12.1) befestigt ist, und ein dritter Scherenantrieb (14), mittels dem der dritte Monitor (12.3) befestigt ist, sich in entgegengesetzte Richtungen erstrecken, und
- ein zweiter Scherenantrieb (14), mittels dem der zweite Monitor (12.2) befestigt ist, und ein vierter Scherenantrieb (14), mittels dem der vierte Monitor (12.4) befestigt ist, sich in entgegengesetzte Richtungen erstrecken und
(b) die Scherenantriebe (14.i)
- in eine eingefahrene Position und eine ausgefahrene Position bringbar sind und
- sich in der ersten Konfiguration in der eingefahrenen Position befinden.

12. Monitorsystem (10) nach einem der vorstehenden Ansprüche, **dadurch gekennzeichnet, dass**
- die Scherenantriebe (14.i) in der eingefahrenen Position eine Baulänge (Lo) haben,
- das Monitorsystem (10) zumindest einen Giermotor (24) zum Gieren des zumindest einen Monitors (12) um die Monitor-Schwenkachse (A₁₂) aufweist und
- die Baulänge (Lo) und ein Winkelbereich des zumindest einen Giermotors (24) so gewählt sind, dass ein Kontakt zweier Monitore (12) einer Monitor-Gruppe (G) unabhängig von einer Gier-Stellung bezüglich der Monitor-Schwenkachse (A₁₂) ausgeschlossen ist.

13. Monitorsystem (10) nach einem der vorstehenden Ansprüche, **dadurch gekennzeichnet, dass** die Monitore (12) bezüglich einer Drehbewegung um eine horizontale Rollachse drehstarr an der Basis (16) befestigt sind.

14. Gebäude mit einem Monitorsystem (10) nach einem der vorstehenden Ansprüche, **dadurch gekennzeichnet, dass** die Basis (16)
(a) an einer Decke (41) des Gebäudes oder einem Masten (40) hängt oder
(b) an einem Fuß, der auf dem Boden steht, befestigt ist.

## Claims

1. A monitor system (10) with
(a) a first monitor (12.1),
(b) a second monitor (12.2),
(c) a third monitor (12.3),
(d) at least a fourth monitor (12.4) and
(e) a base (16),
(f) wherein the monitors (12.i) are fixed to the base (16) such that they can
each be moved by way of a motor in at least two degrees of freedom, **characterised in that**
(g) at least two monitors (12.1, 12.3) are fixed to the base (16) by means of lazy tong drives (14.1),
(h) at least three monitors (12.1, 12.2, 12.3) form a first monitor group (G1) and are rotatably mounted about a common segment axis of rotation (D23.1) and can each be moved by way of a motor by means of a lazy tong drive (14.1, 14.2, 14.3),
(i) wherein all of these lazy tong drives (14.1, 14.2, 14.3) have a common first drive unit (48.1).

2. The monitor system (10) according to claim 1, **characterised in that**
(a) the lazy tong drive (14.1) has a tong arm (19) and
(b) the one tong arm (19)
- is fixed at a proximal end (20.1) to the base (16),
- comprises a distal end (22.1) to which the monitor (12.1) is fixed, and/or that
(c) the monitor (12.1) is fixed to the distal end (22.1) such that it can be swivelled about a monitor swivel axis (A12.1).

3. The monitor system (10) according one of the preceding claims, **characterised in that** the at least one monitor (12.1) is fixed to the base (16) such that it can be swivelled by means of the lazy tong drive (14.1) about a horizontal swivel drive swivel axis (H_{14.1}).

4. The monitor system (10) according to one of the preceding claims, **characterised by**
(a) a first monitor group (G1) with at least three monitors (12.1, 12.2, 12.3, 12.4) that are fixed to the base (16) such that they can be collectively rotated,
(b) a second monitor group (G2) with at least three monitors (12.5, 12.6, 12.7, 12.8) that are fixed to the base (16) such that they can be collectively rotated, and
(c) a third monitor group (G3) with at least three monitors (12.9, 12.10, 12.11, 12.12) that are fixed to the base (16) such that they can be collectively rotated,
(d) wherein the monitor system (10) comprises
a first segment (18.1),
- that is fixed to the base (16) such that it can be automatically rotated about a vertical axis (D₁₈) and
- to which the monitors (12) in the first monitor group (G1) are fixed,
(e) a second segment (18.2),
- that is fixed to the base (16) such that it can be automatically rotated about the vertical axis (D₁₈),
- to which the monitors (12) in the second monitor group (G2) are fixed and
- that is arranged above the first segment (18.1), and
(f) a third segment (18.3),
- that is fixed to the base (16) such that it can be rotated about the vertical axis (D₁₈),
- to which the monitors (12) in the third monitor group (G3) are fixed
and
- that is arranged above the second segment (18.2).

5. The monitor system (10) according to one of the preceding claims, **characterised in that**
(a) the first drive unit (48.1) has a first drive (54), in particular a first crank drive (54), by means of which a first axial distance (Δz_{1,2}) of a first platform (33.1) from a second platform (31.1) can be adjusted, and
(b) the lazy tong drives (14.1, 14.2 14.3, 14.4) are each connected to the first platform (33.1) at a first foot point (50.1, 50.2, 50.3, 50.4) of their tong arm (19.1, 19.2, 19.3, 19.4), and
the second platform (31.1) at a second foot point (52.1, 52.2, 52.3, 52.4) of their tong arm (19.1, 19.2, 19.3, 19.4) such that the tong arms (19.1, 19.2, 19.3, 19.4) can be retracted and extended by means of the first crank drive (54).

6. The monitor system (10) according to one of the preceding claims, **characterised in that**
(a) the tong arms (19.1, 19.2, 19.3, 19.4) are connected to the first platform (33.1) at their respective first foot point (50.1, 50.2, 50.3, 50.4) by means of a swivel lever (74.1, 74.2, 74.3, 74.4),
(b) the first drive unit (48) comprises a second drive, especially a second crank drive (72), by means of which the swivel angle (σ) of the swivel lever (74.1, 74.2, 74.3, 74.4) can be adjusted such that the lazy tong drives (14.1, 14.2, 14.3, 14.4) can be collectively swivelled about a pitch angle (α).

7. The monitor system (10) according to one of the preceding claims, **characterised by**
(a) a third platform (80.1, red),
(b) wherein the swivel levers (74.1, 74.2, 74.3, 74.4) are articulated on the third platform (80.1 red) and
(c) wherein, by means of the second crank drive (72), a second axial distance (Δz_{1,3}) between the third platform (80.1 red) and the first platform (33.1) can be adjusted, and
(d) wherein the swivel angle (σ) can be adjusted by changing the second axial distance (Δz_{1,3}).

8. The monitor system (10) according to one of the preceding claims, **characterised in that**
(a) the first crank drive (54) has
(i) a first electric motor (56),
which is fixed to the first platform (33.1),
(ii) a first bevel gear (58) with
- a first crown gear (60),
- a first first-crank-drive bevel wheel (62.1) and
- a second first-crank-drive bevel wheel (62.2),
(iii) a first first-crank-drive crank (64.1) is connected to the first first-crank-drive bevel wheel (62.1) such that it is torque-proof, and
(iv) a second first-crank-drive crank (64.2), which is connected to the first first-crank-drive bevel wheel (62.2) such that it is torque-proof, has
(v) a first first-crank-drive connecting rod (66.1)
that is connected at a first end to the first first-crank-drive crank (64.1) and at a second end to the second platform (31.1), and
(vi) a second first-crank-drive connecting rod (66.2) that is connected at a first end to the second first-crank-drive crank (64.2) and at a second end to the second platform (33.1), and
(b) the first electric motor (56) is connected to the first crown gear (60) for driving the system such that the first-crank-drive cranks (64.1, 64.2) can be rotated by means of the first electric motor (56), and that
(c) the first-crank-drive cranks (64.1, 64.2) are connected to the respective bevel wheels such that the first first-crank-drive crank (64.1) is at its top dead centre point when the second first-crank-drive crank (64.2) is at its top dead centre point, and that the first first-crank-drive crank (64.1) is at its bottom dead centre point when the second first-crank-drive crank (64.2) is at its bottom dead centre point.

9. The monitor system (10) according to one of the preceding claims, **characterised in that**
(a) the second crank drive (72) has
(i) a second electric motor (82),
(ii) a second bevel gear with
- a second crown gear (88),
- a first second-crank-drive bevel wheel (90.1) and
- a second second-crank-drive bevel wheel (90.2),
(iii) a first second-crank-drive crank (92.1) is connected to the first second-crank-drive bevel wheel (90.1) such that it is torque-proof, and
(iv) a second second-crank-drive crank (92.2), which is connected to the second second-crank-drive bevel wheel (90.2) such that it is torque-proof, has
(v) a first second-crank-drive connecting rod (94.1) that is connected at a first end to the first second-crank-drive crank (92.1) and at a second end to the third platform (80.1), and
(vi) a second second-crank-drive connecting rod (94.2) that is connected at a first end to the second second-crank-drive crank (92.2) and at a second end to the third platform (80.1), and
(b) the second electric motor (82) is connected to the first crown gear (88) for driving the system such that the second-crank-drive cranks (92.1, 92.2) can be rotated by means of the second electric motor (82), and that
(c) the second-crank-drive cranks (92.1, 92.2) are connected to the respective bevel wheels such that the first second-crank-drive crank (92.1) is at its top dead centre point when the second second-crank-drive crank (92.2) is at its top dead centre point, and that the first second-crank-drive crank (92.1) is at its bottom dead centre point when the second second-crank-drive crank (92.2) is at its bottom dead centre point.

10. The monitor system (10) according to one of the preceding claims, **characterised by** an electric control unit (39) that is designed to automatically carry out a method featuring the steps:
(i) moving the monitors (12) from a first configuration into a second configuration and/or
(ii) rotating at least one segment (18) about the vertical axis (D₁₈).

11. The monitor system (10) according to one of the preceding claims, **characterised in that**
(a) when in the first configuration, in at least one monitor group (G1, G2, G3)
- a first monitor (12.1) and a second monitor (12.2) are arranged side-by-side, wherein the monitors (12) point in a first direction (R1),
- a third monitor (12.3) and a fourth monitor (12.4) are arranged side-by-side, wherein the monitors (12) point in a second direction (R2) that is opposite to the first direction (R1),
- a first lazy tong drive (14), by means of which the first monitor (12.1) is fixed, and a third lazy tong drive (14) by means of which the third monitor (12.3) is fixed, extend in opposite directions, and
- a second lazy tong drive (14), by means of which the second monitor (12.2) is fixed, and a fourth lazy tong drive (14) by means of which the fourth monitor (12.4) is fixed, extend in opposite directions, and
(b) the lazy tong drives (14.i)
- can be moved into a retracted position and an extended position, and
- are in the retracted position when in the first configuration.

12. The monitor system (10) according to one of the preceding claims, **characterised in that**
- when in the retracted position, the lazy tong drives (14.i) have an overall length (L₀),
- the monitor system (10) comprises at least one yaw motor (24) for yawing the at least one monitor (12) about the monitor swivel axis (A₁₂), and
- the overall length (Lo) and an angle range of the at least one yaw motor (24) are selected in such a way that any contact between two adjacent monitors (12) in a monitor group (G) is ruled out, regardless of a yaw position relative to the monitor swivel axis (A₁₂).

13. The monitor system (10) according one of the preceding claims, **characterised in that** the monitors (12) are rigidly fixed to the base (16) in terms of a rotational movement about a horizontal roll axis.

14. A building with a monitor system (10) according to one of the preceding claims, **characterised in that** the base (16)
(a) hangs on a ceiling (41) of the building or to a mast (40), or
(b) is fixed to a foot that is located on the base.

## Revendications

1. Système d'écrans (10), comprenant
(a) un premier écran (12.1),
(b) un second écran (12.2),
(c) un troisième écran (12.3),
(d) au moins un quatrième écran (12.4), et
(e) une base (16),
(f) les écrans (12.i) étant chacun fixés à la base (16) de façon mobile par voie motrice au moins dans deux degrés de liberté,
**caractérisé en ce que**
(g) au moins deux écrans (12.1, 12.3) sont fixés à la base (16) au moyen d'entraînements en ciseaux (14.1),
(h) au moins trois écrans (12.1, 12.2, 12.3) constituent un premier groupe d'écrans (G1) et sont montés de façon mobile en rotation autour d'un axe de rotation de segment commun (D23.1) et sont mobiles par voie motrice au moyen d'un entraînement en ciseaux respectif (14.1, 14.2, 14.3),
(i) tous ces entraînements en ciseaux (14.1, 14.2, 14.3) ayant une première unité d'entraînement (48.1) commune.

2. Système d'écrans (10) selon la revendication 1,
**caractérisé en ce que**
(a) l'entraînement en ciseaux (14.1) comporte un bras de ciseaux (19), et
(b) ledit bras de ciseaux (19)
- est fixé à la base (16) par une extrémité proximale (20.1),
- présente une extrémité distale (22.1) à laquelle l'écran (12.1) est fixé, et/ou **en ce que**
(c) l'écran (12.1) est fixé à l'extrémité distale (22.1) de façon mobile en basculement autour d'un axe de basculement d'écran (A12.1).

3. Système d'écrans (10) selon l'une des revendications précédentes, **caractérisé en ce que** ledit au moins un écran (12.1) est fixé à la base (16) de façon mobile en basculement autour d'un axe de basculement horizontal (H_{14.1}) d'entraînement de basculement au moyen d'un entraînement en ciseaux (14.1).

4. Système d'écrans (10) selon l'une des revendications précédentes, **caractérisé par**
(a) un premier groupe d'écrans (G1) qui comprend au moins trois écrans (12.1, 12.2, 12.3, 12.4) fixés à la base (16) de façon mobile en rotation collectivement,
(b) un second groupe d'écrans (G2) qui comprend au moins trois écrans (12.5, 12.6, 12.7, 12.8) fixés à la base (16) de façon mobile en rotation collectivement,
(c) un troisième groupe d'écrans (G3) qui comprend au moins trois écrans (12.9, 12.10, 12.11, 12.12) fixés à la base (16) de façon mobile en rotation collectivement,
(d) le système d'écrans (10) comprenant
un premier segment (18.1)
- qui est fixé à la base (16) de façon mobile en rotation automatiquement autour d'un axe vertical (D₁₈) et
- auquel sont fixés les écrans (12) du premier groupe d'écrans (G1), et
(e) un second segment (18.2)
- qui est fixé à la base (16) de façon mobile en rotation automatiquement autour de l'axe vertical (D₁₈) et
- auquel sont fixés les écrans (12) du second groupe d'écrans (G2), et
- qui est disposé au-dessus du premier segment (18.1),
(f) un troisième segment (18.3)
- qui est fixé à la base (16) de façon mobile en rotation autour de l'axe vertical (D₁₈) et
- auquel sont fixés les écrans (12) du troisième groupe d'écrans (G3), et
- qui est disposé au-dessus du second segment (18.2).

5. Système d'écrans (10) selon l'une des revendications précédentes, **caractérisé en ce que**
(a) la première unité d'entraînement (48.1) comprend un premier entraînement (54), en particulier une première commande à manivelle (54), au moyen duquel une première distance axiale (Δz_{1,2}) d'une première plate-forme (33.1) par rapport à une seconde plate-forme (31.1) est variable, et
(b) les entraînements en ciseaux (14.1, 14.2, 14.3, 14.4) sont chacun reliés à la première plate-forme (33.1) par un premier point de pied (50.1, 50.2, 50.3, 50.4) de leur bras de ciseaux (19.1, 19.2, 19.3, 19.4), et
sont chacun reliés à la seconde plate-forme (31.1) par un second point de pied (52.1, 52.2, 52.3, 52.4) de leur bras de ciseaux (19.1, 19.2, 19.3, 19.4), de sorte que les bras de ciseaux (19.1, 19.2, 19.3, 19.4) peuvent être rétractés et déployés au moyen de la première commande à manivelle (54).

6. Système d'écrans (10) selon l'une des revendications précédentes, **caractérisé en ce que**
(a) les bras de ciseaux (19.1, 19.2, 19.3, 19.4) sont reliés à la première plate-forme (33.1) par leur premier point de pied respectif (50.1, 50.2, 50.3, 50.4) au moyen d'un levier basculant respectif (74.1, 74.2, 74.3, 74.4),
(b) la première unité d'entraînement (48) présente un second entraînement, en particulier une seconde commande à manivelle (72), au moyen duquel un angle de basculement (σ) des leviers basculants (74.1, 74.2, 74.3, 74.4) est variable, de sorte que les entraînements en ciseaux (14.1, 14.2, 14.3, 14.4) peuvent être basculés collectivement d'un angle de tangage (a).

7. Système d'écrans (10) selon l'une des revendications précédentes, **caractérisé par**
(a) une troisième plate-forme (80.1 rot),
(b) les leviers basculants (74.1, 74.2, 74.3, 74.4) étant articulés sur la troisième plate-forme (80.1 rot), et
(c) une seconde distance axiale (Δz_{1,3}) entre la troisième plate-forme (80.1 rot) et la première plate-forme (33.1) étant variable au moyen de la seconde commande à manivelle (72), et
(d) l'angle de basculement (σ) étant variable par modification de la seconde distance axiale (Δz_{1,3}).

8. Système d'écrans (10) selon l'une des revendications précédentes, **caractérisé en ce que**
(a) la première commande à manivelle (54) comprend
(i) un premier moteur électrique (56),
fixé à la première plate-forme (33.1),
(ii) un premier engrenage conique (58) qui comprend
- une première couronne dentée (60)
- une première roue conique (62.1) de première commande à manivelle, et
- une seconde roue conique (62.2) de première commande à manivelle,
(iii) une première manivelle (64.1) de première commande à manivelle, qui est reliée solidairement en rotation à la première roue conique (62.1) de première commande à manivelle, et
(iv) une seconde manivelle (64.2) de première commande à manivelle, qui est reliée solidairement en rotation à la seconde roue conique (62.3) de première commande à manivelle,
(v) une première bielle (66.1) de première commande à manivelle,
qui est reliée par une première extrémité à la première manivelle (54.1) de première commande à manivelle, et par une seconde extrémité à la seconde plate-forme (31.1), et
(vi) une deuxième bielle (66.2) de première commande à manivelle,
qui est reliée par une première extrémité à la seconde manivelle (64.2) de première commande à manivelle, et par une seconde extrémité à la seconde plate-forme (33.1),
(b) le premier moteur électrique (56) est relié à la première couronne dentée (60) pour l'entraînement, de sorte que les manivelles (64.1, 64.2) de première commande à manivelle sont mobiles en rotation au moyen du premier moteur électrique (56), et **en ce que**
(c) les manivelles (64.1, 64.2) de première commande à manivelle sont reliées aux roues coniques respectives de telle sorte que la première manivelle (64.1) de première commande à manivelle se trouve à son point mort haut exactement lorsque la seconde manivelle (64.2) de première commande à manivelle se trouve à son point mort haut, et que la première manivelle (64.1) de première commande à manivelle se trouve à son point mort bas exactement lorsque la seconde manivelle (64.2) de première commande à manivelle se trouve à son point mort bas.

9. Système d'écrans (10) selon l'une des revendications précédentes, **caractérisé en ce que**
(a) la seconde commande à manivelle (72) comprend
(i) un second moteur électrique (82),
(ii) un second engrenage conique comprenant
- une seconde couronne dentée (88),
- une première roue conique (90.1) de seconde commande à manivelle, et
- une seconde roue conique (90.2) de seconde commande à manivelle,
(iii) une première manivelle (92.1) de seconde commande à manivelle, qui est reliée solidairement en rotation à la première roue conique (90.1) de seconde commande à manivelle, et
(iv) une seconde manivelle (92.2) de seconde commande à manivelle, qui est reliée solidairement en rotation à la seconde roue conique (90.2) de seconde commande à manivelle,
(v) une première bielle (94.1) de seconde commande à manivelle,
qui est reliée par une première extrémité à la première manivelle (92.1) de seconde commande à manivelle, et par une seconde extrémité à la troisième plate-forme (80.1), et
(vi) une seconde bielle (94.2) de seconde commande à manivelle,
qui est reliée par une première extrémité à la seconde manivelle (92.2) de seconde commande à manivelle, et par une seconde extrémité à la troisième plate-forme (80.1),
(b) le second moteur électrique (82) est relié à la seconde couronne dentée (88) pour l'entraînement, de sorte que les manivelles (92.1, 92.2) de seconde commande à manivelle sont mobiles en rotation au moyen du second moteur électrique (82), et **en ce que**
(c) les manivelles (92.1, 92.2) de seconde commande à manivelle sont reliées aux roues coniques respectives de telle sorte que la première manivelle (92.1) de seconde commande à manivelle se trouve à son point mort haut exactement lorsque la seconde manivelle (92.2) de seconde commande à manivelle se trouve à son point mort haut, et que la première manivelle (92.1) de seconde commande à manivelle se trouve à son point mort bas exactement lorsque la seconde manivelle (92.2) de seconde commande à manivelle se trouve à son point mort bas.

10. Système d'écrans (10) selon l'une des revendications précédentes, **caractérisé par** un contrôleur électrique (39) adapté pour automatiquement mettre en œuvre un procédé comprenant les étapes consistant à :
(i) déplacer les écrans (12) d'une première configuration à une seconde configuration et/ou
(ii) faire tourner au moins un segment (18) autour de l'axe vertical (D₁₈).

11. Système d'écrans (10) selon l'une des revendications précédentes, **caractérisé en ce que**
(a) dans la première configuration, dans au moins un groupe d'écrans (G1, G2, G3)
- un premier écran (12.1) et un second écran (12.2) sont disposés côte à côte, les écrans (12) étant dirigés dans une première direction (R1),
- un troisième écran (12.3) et un quatrième écran (12.4) sont disposés côte à côte, les écrans (12) étant dirigés dans une seconde direction (R2) opposée à la première direction (R1),
- un premier entraînement en ciseaux (14) au moyen duquel le premier écran (12.1) est fixé, et un troisième entraînement en ciseaux (14) au moyen duquel le troisième écran (12.3) est fixé, s'étendent dans des directions opposées, et
- un second entraînement en ciseaux (14) au moyen duquel le second écran (12.2) est fixé, et un quatrième entraînement en ciseaux (14) au moyen duquel le quatrième écran (12.4) est fixé, s'étendent dans des directions opposées, et
(b) les entraînements en ciseaux (14.i)
- peuvent être amenés dans une position rétractée et dans une position déployée, et
- dans la première configuration, ils sont en position rétractée.

12. Système d'écrans (10) selon l'une des revendications précédentes, **caractérisé en ce que**
- les entraînements en ciseaux (14.i) ont une longueur structurelle (Lo) en position rétractée,
- le système d'écrans (10) comprend au moins un moteur de lacet (24) pour mouvoir en lacet ledit au moins un écran (12) autour de l'axe de basculement d'écran (A₁₂), et
- la longueur structurelle (Lo) et une plage angulaire dudit au moins un moteur de lacet (24) sont choisies de telle sorte qu'un contact entre deux écrans (12) d'un groupe d'écrans (G) est exclu, indépendamment d'une position de lacet par rapport à l'axe de basculement d'écran (A₁₂).

13. Système d'écrans (10) selon l'une des revendications précédentes, **caractérisé en ce que** les écrans (12) sont fixés à la base (16) solidairement en rotation par rapport à un mouvement de rotation autour d'un axe de roulis horizontal.

14. Bâtiment comprenant un système d'écrans (10) selon l'une des revendications précédentes, **caractérisé en ce que** la base (16)
(a) est suspendue à un plafond (41) du bâtiment ou à un poteau (40), ou
(b) est fixée à un pied qui repose sur le sol.
